# EUROPÄISCHE PATENTANMELDUNG

(11) **EP 4 459 932 A1**
(43) Veröffentlichungstag der Anmeldung: **06.11.2024**
(21) Anmeldenummer: 23171691.1
(22) Anmeldetag: 04.05.2023
(51) Int. Cl.: H04L 12/403, H02H 1/00, H02H 3/08, H02H 7/26, H04L 61/5038, H04L 41/0806, H04B 3/54

(54) **ELEKTRISCHE SCHALTVORRICHTUNG**

(71) Anmelder: Murrelektronik GmbH, 71570 Oppenweiler (DE)
(72) Erfinder: Lang, Rudolf, 71576 Burgstetten (DE); Wolff, Ingo, 74613 Öhringen (DE)
(74) Vertreter: Karzel, Philipp

(57) **Zusammenfassung**

Die Erfindung betrifft eine elektrische Schaltvorrichtung umfassend mehrere elektrische Verbraucher (11, 12, 13), eine elektrische Energiequelle (2) zur Versorgung der mehreren elektrischen Verbraucher (11, 12, 13) mit elektrischer Energie, eine Busleitung (3) zur Leitung der elektrischen Energie von der elektrischen Energiequelle (2) zu den mehreren elektrischen Verbrauchern (11, 12, 13), wobei die mehreren elektrischen Verbraucher (11, 12, 13) mit der Busleitung (3) verbunden sind und eine Gruppe mehrerer elektronischer Sicherungen (31, 32, 33), die elektrisch zwischen der elektrischen Energiequelle (2) und den mehreren elektrischen Verbrauchern (11, 12, 13) angeordnet sind, wobei die mehreren elektronischen Sicherungen (31, 32, 33) getrennt voneinander ausgebildet sind, wobei die mehreren elektronischen Sicherungen (31, 32, 33) verteilt in der elektrischen Schaltvorrichtung (1) angeordnet sind. Die elektrische Schaltvorrichtung (1) umfasst eine Steuereinheit (4). Die Steuereinheit (4) ist in der Busleitung (3) angeordnet. Die Steuereinheit (4) ist so ausgelegt, dass mittels der Steuereinheit (4) eine Adressierung der mehreren elektronischen Sicherungen (31, 32, 33) der Gruppe über die Busleitung (3) erfolgen kann.

## Beschreibung

Die Erfindung betrifft eine elektrische Schaltvorrichtung nach dem Oberbegriff des Anspruchs 1.

Die vorliegende Erfindung befasst sich mit der Einbindung von einzelnen elektronischen Sicherungen in eine Schaltung. In den meisten Fällen werden nicht einzelne, sondern mehrere elektronische Sicherungen in eine elektrische Schaltvorrichtung eingesetzt, um mehrere Stromkreise unabhängig voneinander abzusichern. Wie in der DE 10 2014 019 725 B3 beschrieben, ist es bei getrennt voneinander ausgebildeten mehreren elektronischen Sicherungen, die verteilt in der elektrischen Schaltvorrichtung angeordnet sind, vorteilhaft oder sogar erforderlich, diese verteilten elektronischen Sicherungen abhängig voneinander zu betreiben. Beispielsweise beim Zuschalten der Versorgungsspannung werden die verschiedenen elektronischen Sicherungen nacheinander zugeschaltet, damit Einschaltströme nacheinander und nicht gleichzeitig auftreten (Sequenzierung). Auch beim Unterschreiten der minimal zulässigen Eingangsspannung aufgrund von Überlast werden in der Regel alle elektronischen Sicherungen abgeschaltet, bis sich die Eingangsspannung erholt hat. Anschließend werden bis auf die elektronischen Sicherungen, die zum Zeitpunkt des Abschaltens Überstrom geführt haben, alle anderen elektronischen Sicherungen wieder eingeschaltet.

Ein solcher abhängiger Betrieb der mehreren verteilten elektronischen Sicherungen erfordert eine Koordination der einzelnen elektronischen Sicherungen untereinander. Dies ist nicht ohne weiteres möglich. In der DE 10 2014 019 725 B3 ist für die Adresszuweisung der einzelnen verteilten elektronischen Sicherungen eine Kommunikationsleitung vorgesehen. Die Anordnung einer solchen Kommunikationsleitung ist zeit- und kostenintensiv.

Der Erfindung liegt die Aufgabe zugrunde, eine gattungsgemäße elektrische Schaltvorrichtung derart weiterzubilden, dass ein abhängiger Betrieb der verteilten elektronischen Sicherungen kostengünstig und auf einfache Weise möglich ist.

Diese Aufgabe wird durch eine elektrische Schaltvorrichtung mit den Merkmalen des Anspruchs 1 gelöst.

Erfindungsgemäß ist in der Busleitung zur Leitung der elektrischen Energie von der elektrischen Energiequelle zu den mehreren elektrischen Verbrauchern eine Steuereinheit angeordnet. Die Steuereinheit ist so ausgelegt, dass mittels der Steuereinheit eine Adressierung der mehreren elektronischen Sicherungen der Gruppe über die Busleitung erfolgen kann. Erfindungsgemäß wird die bereits zur Leitung der elektrischen Energie vorhandene Busleitung auch für die Adressierung der mehreren elektronischen Sicherungen als Kommunikationsleitung genutzt. Dadurch kann auf separat von der Busleitung zur Leitung der elektrischen Energie ausgebildete Kommunikationsleitung verzichtet werden. Dadurch kann die elektrische Schaltvorrichtung kostengünstig auf einfache Weise hergestellt werden. Ein abhängiger Betrieb der verteilten, einzelnen elektronischen Sicherungen der Gruppe der mehreren elektronischen Sicherungen ist auf einfache und kostengünstige Weise möglich. Die elektrische Schaltvorrichtung kann kompakt gestaltet sein.

Insbesondere enthält die Steuereinheit ein Gateway. Es kann auch vorgesehen sein, dass die Steuereinheit vollständig durch ein Gateway gebildet ist. Das Gateway dient dazu, zwischen zwei Systemen eine Verbindung herzustellen. Das Gateway stellt die Brücke zur Kommunikation zwischen den mehreren elektronischen Sicherungen der Gruppe untereinander und/oder mit einem übergeordneten System, insbesondere mit einem Steuerteil der Steuereinheit dar.

Insbesondere wird bei der Adressierung der Gruppe der mehreren elektronischen Sicherungen eine Position der zu adressierenden elektronischen Sicherung aus der Gruppe relativ zu den übrigen elektronischen Sicherungen aus der Gruppe in der elektrischen Schaltvorrichtung bestimmt. Insbesondere wird die Position bezüglich des Relativabstands zur Steuereinheit entlang der Busleitung bestimmt. Anschließend wird insbesondere eine Adresse an die zu adressierende elektronische Sicherung vergeben. Die Adresse setzt sich zusammen aus einem Namen der zu adressierenden elektronischen Sicherung und ihrer Position. Der Name der elektronischen Sicherung wird auch als ID bezeichnet. Vorzugsweise wird die Adresse durch die Steuereinheit vergeben.

Zweckmäßig ist die elektrische Energiequelle ein Netzteil, insbesondere ein AC/DC-Netzteil. Es kann sich bei dem Netzteil aber auch um ein DC/DC-Netzteil handeln. Zweckmäßig ist das Gehäuse des Netzteils in der Schutzart IP20 bis IP 69K, bevorzugt in der Schutzart IP54 bis IP68, insbesondere in der Schutzart IP 67 (DIN EN 60529 (VDE 0470-1):2014-09 Schutzarten durch Gehäuse (IP-Code) (IEC 60529:1989 + A1:1999 + A2:2013)) ausgeführt.

Vorteilhaft versorgt die elektrische Energiequelle die mehreren elektrischen Verbraucher mit Gleichspannung. Zweckmäßig ist die Gleichspannung eine Schutzkleinspannung. Insbesondere entspricht die Schutzkleinspannung einer Nennspannung von 24 V oder von 48 V. Bevorzugt erfolgt die Adressierung der mehreren elektronischen Sicherungen der Gruppe durch Aufmodulation eines Nutzsignals auf das Signal zur Übertragung der elektrischen Energie. Das Signal zur Übertragung der elektrischen Energie wird als Träger bezeichnet, auf den das zu übertragende Nutzsignal aufmoduliert wird. Vorliegend ist das Nutzsignal insbesondere ein Signal zur Adressierung einer elektronischen Sicherung. Als Modulationsverfahren kommen insbesondere die Amplitudenumtastung, die Frequenzumtastung und die Phasenumtastung in Frage.

Vorteilhaft ist die Steuereinheit so ausgelegt, dass mittels der Steuereinheit die Adressierung der mehreren elektronischen Sicherungen der Gruppe über die Busleitung erfolgen kann.

In vorteilhafter Weiterbildung der Erfindung ist vorgesehen, dass die Adressierung der mehreren elektronischen Sicherungen der Gruppe sukzessive in der Weise erfolgt, dass bezüglich der Busleitung unmittelbar benachbarte elektronische Sicherungen aus der Gruppe der mehreren elektronischen Sicherungen unmittelbar nacheinander adressiert werden.

In vorteilhafter erster Variante der Erfindung ist vorgesehen, dass die elektrische Schaltvorrichtung mehrere Strommesseinrichtungen umfasst. Zweckmäßig ist jeder der mehreren elektronischen Sicherungen eine Strommesseinrichtung mit einem Belastungswiderstand zugeordnet. Zumindest ein Teil der Gruppe der mehreren elektronischen Sicherungen gehört einer Anfangsbelastungsgruppe an. Die Anfangsbelastungsgruppe umfasst die entlang der Busleitung am weitesten entfernt von der elektrischen Energiequelle angeordnete elektronische Sicherung der Gruppe der mehreren elektronischen Sicherungen. Die Anfangsbelastungsgruppe umfasst zumindest eine weitere elektronische Sicherung der Gruppe der mehreren elektronischen Sicherungen, insbesondere alle übrigen elektronischen Sicherungen der Gruppe der mehreren elektronischen Sicherungen. Zweckmäßig ist die elektrische Schaltvorrichtung bzw. die Steuereinheit so ausgelegt, dass
- bei der Adressierung der mehreren elektronischen Sicherungen der Gruppe zunächst alle Belastungswiderstände der Anfangsbelastungsgruppe auf die Busleitung geschaltet sind und die elektrische Energiequelle belasten,
- die den elektronischen Sicherungen der Anfangsbelastungsgruppe zugeordneten Strommesseinrichtungen den Strom in der Busleitung nach der jeweils zugehörigen elektronischen Sicherung messen und
- die Steuereinheit derjenigen elektronischen Sicherung der Anfangsbelastungsgruppe, der ein Strommesswert unterhalb eines Leerlaufstromwerts der elektrischen Schaltvorrichtung zugehörig ist, über die Busleitung eine Adresse zuweist, die mit der entlang der Busleitung am weitesten von der elektrischen Energiequelle entfernten Position verknüpft ist.

Insbesondere ist der Strommesswert unterhalb des Leerlaufstromwerts der elektrischen Schaltvorrichtung der kleinste von allen Strommesseinrichtungen gemessene Strommesswert. Auf diese Weise kann in einem ersten Schritt auf einfache Weise der entlang der Busleitung am weitesten von der elektrischen Energiequelle entfernt liegenden elektronischen Sicherung aus der Gruppe der mehreren elektronischen Sicherungen eine Adresse zugewiesen werden. Insbesondere ist nur ein einziger Strommesswert unterhalb des Leerlaufstromwerts.

Vorteilhaft ist bei der Adressierung der Gruppe der mehreren elektronischen Sicherungen vorgesehen, dass nachdem einer elektronischen Sicherung eine Adresse zugewiesen wurde, der zu dieser elektronischen Sicherung gehörige Belastungswiderstand von der Busleitung getrennt wird und bei der weiteren Adressierung getrennt bleibt. Zweckmäßig ist bei der weiteren Adressierung der Gruppe der mehreren elektronischen Sicherungen die elektrische Energiequelle durch die weiterhin auf die Busleitung geschalteten Belastungswiderstände der Anfangsbelastungsgruppe belastet. Vorteilhaft messen die den elektronischen Sicherungen der Anfangsbelastungsgruppe zugeordneten Strommesseinrichtungen den Strom in der Busleitung nach der jeweils zugehörigen elektronischen Sicherung. "Nach" der elektronischen Sicherung bedeutet, dass die jeweilige Strommesseinrichtung einen entlang der Busleitung gemessenen größeren Abstand zu der elektrischen Energiequelle aufweist als die jeweils zugehörige elektronische Sicherung. Insbesondere weist die Steuereinheit derjenigen elektronischen Sicherung der elektronischen Sicherungen der Anfangsbelastungsgruppe mit weiterhin auf die Busleitung geschalteten Belastungswiderständen, der ein Stromnetzwerk unterhalb des Leerlaufstromwerts der elektrischen Schaltvorrichtung zugehörig ist, über die Busleitung eine Adresse zu. Insbesondere entspricht der Strommesswert unterhalb des Leerlaufstromwerts dem kleinsten der von den Strommesseinrichtungen, die den elektronischen Sicherungen der Anfangsbelastungsgruppe mit weiterhin auf die Busleitung geschalteten Belastungswiderständen zugeordnet sind, gemessenen Strommesswert. Die über die Busleitung zugewiesene Adresse ist mit der entlang der Busleitung am weitesten von der elektrischen Energiequelle entfernten Position der elektronischen Sicherungen der Anfangsbelastungsgruppe mit weiterhin auf die Busleitung geschalteten Belastungswiderständen verknüpft. Durch diesen weiteren Schritt bei der weiteren Adressierung der Gruppe der mehreren elektronischen Sicherungen kann auf einfache Weise die nächste Adresse an diejenige elektronische Sicherung der Gruppe vergeben werden, die bisher noch keine Adresse erhalten hat und gleichzeitig entlang der Busleitung am weitesten von der elektrischen Energiequelle entfernt liegt. Auf diese Weise ist eine einfache sukzessive Adressierung der elektronischen Sicherungen der Gruppe möglich.

Dadurch, dass nach jeder erfolgten Adressierung der zu der eben adressierten elektronischen Sicherung gehörige Belastungswiderstand von der Busleitung getrennt wird, kann im nächsten Adressierungsschritt die nächste elektronische Sicherung adressiert werden.

Zweckmäßig erfolgt die Adressierung so lange, bis alle Belastungswiderstände der Anfangsbelastungsgruppe von der Busleitung getrennt sind. Dann sind alle elektronischen Sicherungen der Anfangsbelastungsgruppe adressiert.

Vorteilhaft sendet diejenige elektronische Sicherung aus der Anfangsbelastungsgruppe, deren Belastungswiderstand auf die Busleitung geschaltet ist und der der Strommesswert unterhalb des Leerlaufstrommesswerts der elektrischen Schaltvorrichtung zugehörig ist, ein Signal zur Adressanfrage an die Steuereinheit. Insbesondere wird das Signal zur Adressanfrage über die Busleitung versendet. Zweckmäßig vergibt die Steuereinheit dann durch Aussendung eines entsprechenden Signals über die Busleitung eine Adresse an die elektronische Sicherung, von der das zuletzt ausgesendete Signal zur Adressanfrage stammt. Dadurch kann die Steuereinheit auf einfache Weise die Adressierung zentral steuern.

Insbesondere kann das Signal, das von der Steuereinheit zur Adressvergabe an diejenige elektronische Sicherung versendet wird, die zuletzt ein Signal zur Adressanfrage an die Steuereinheit gesendet hat, dazu genutzt werden, den Belastungswiderstand, der zu dieser nun adressierten elektronischen Sicherung gehörig ist, von der Busleitung getrennt wird.

In alternativer zweiter Variante der Erfindung ist vorgesehen, dass die elektrische Schaltvorrichtung, insbesondere die Steuereinheit, so ausgelegt ist, dass bei der Adressierung der mehreren elektronischen Sicherungen der Gruppe zunächst außer einer zu adressierenden ersten elektronischen Sicherung der Gruppe keine der elektronischen Sicherungen der Gruppe die elektrische Energiequelle belastet, insbesondere über die Busleitung. Zweckmäßig belastet die erste elektronische Sicherung der Gruppe die Energiequelle über einen definierten, schaltbaren Widerstand der ersten elektronischen Sicherung. Insbesondere ist der definierte, schaltbare Widerstand ein komplexer Widerstand. Der komplexe Widerstand kann einen Ohm' schen Widerstand und/oder einen kapazitiven Widerstand umfassen. Insbesondere belasten die übrigen der mehreren elektronischen Sicherungen der Gruppe die elektrische Energiequelle nicht über die Busleitung. Insbesondere entnehmen die übrigen der mehreren elektronischen Sicherungen der Gruppe keine Energie aus der Energiequelle über die Busleitung. Insbesondere stellen die übrigen der mehreren elektronischen Sicherungen einen vernachlässigbaren Widerstand, insbesondere einen vernachlässigbaren komplexen Widerstand dar. Bei der Adressierung der mehreren elektronischen Sicherungen der Gruppe stellt die erste zu adressierende elektronische Sicherung der Gruppe zu Beginn der Adressierung insbesondere einen Kurzschluss dar. Alternativ hierzu kann auch vorgesehen sein, dass die Busleitung durch die zu adressierende erste Sicherung in dem der elektrischen Energiequelle abgewandt liegenden Teil der Busleitung unterbrochen ist, so dass die Busleitung ein offenes Leitungsende aufweist und für nachfolgende elektronische Sicherungen unterbrochen ist. Zweckmäßig wird eine Wechselspannung mit einer von der Steuereinheit vorgegebenen ersten Frequenz an die Busleitung angelegt. Insbesondere wird die Wechselspannung mit der von der Steuereinheit vorgegebenen ersten Frequenz von der Steuereinheit an die Busleitung angelegt. Zweckmäßig bestimmt die Steuereinheit eine erste Phasenverschiebung zwischen Strom und Spannung. Vorteilhaft ist die erste Frequenz so bestimmt, dass die erste Phasenverschiebung ≤ 360°, insbesondere ≤ 180° ist. Anhand der ersten Phasenverschiebung wird vorteilhaft der Abstand der ersten zu adressierenden elektronischen Sicherung zur Steuereinheit, insbesondere entlang der Busleitung gemessen, insbesondere in Relation zu den übrigen elektronischen Sicherungen der Gruppe, bestimmt. Ganz grundsätzlich kann aufgrund der Phasenverschiebung zwischen Strom und Spannung auf die Länge einer offenen oder geschlossenen Leitung zurückgeschlossen werden. Dadurch, dass die erste zu adressierende elektronische Sicherung der Gruppe einen Kurzschluss darstellt oder die Busleitung unterbrochen ist, stellt das System eine geschlossene oder offene Leitung dar. Grundsätzlich könnte mit der Kenntnis, ob die elektronische Sicherung der Gruppe einen Kurzschluss darstellt oder die Busleitung unterbrochen ist, die Länge der Busleitung von der Steuereinheit zu der entsprechenden elektronischen Sicherung absolut bestimmt werden.

Vorteilhaft kann die Abhängigkeit der Phasenverschiebung zwischen Wechselspannung und Strom von der Frequenz der Wechselspannung ausgenutzt werden, um lediglich eine relative Positionsbestimmung der elektronischen Sicherungen vorzunehmen. In vorteilhafter Weiterbildung der Erfindung ist die elektrische Schaltvorrichtung, insbesondere die Steuereinheit so ausgelegt, dass anschließend an die Bestimmung der ersten Phasenverschiebung außer einer zweiten zu adressierenden elektronischen Sicherung der Gruppe der mehreren elektrischen Sicherungen keine der elektronischen Sicherung der Gruppe die elektrische Energiequelle belastet, insbesondere über die Busleitung. Zweckmäßig belastet die zweite elektronische Sicherung der Gruppe die Energiequelle über einen definierten, schaltbaren Widerstand der zweiten elektronischen Sicherung. Insbesondere ist der definierte, schaltbare Widerstand ein komplexer Widerstand. Der komplexe Widerstand kann einen Ohm' schen Widerstand und/oder einen kapazitiven Widerstand umfassen. Insbesondere belasten die übrigen der mehreren elektronischen Sicherungen der Gruppe die elektrische Energiequelle nicht über die Busleitung. Insbesondere entnehmen die übrigen der mehreren elektronischen Sicherungen der Gruppe keine Energie aus der Energiequelle über die Busleitung. Insbesondere stellen die übrigen der mehreren elektronischen Sicherungen einen vernachlässigbaren Widerstand, insbesondere einen vernachlässigbaren komplexen Widerstand dar.

Die zweite zu adressierende elektronische Sicherung der Gruppe stellt dann insbesondere einen Kurzschluss dar. Alternativ hierzu kann auch vorgesehen sein, dass die Busleitung durch die zu adressierende zweite Sicherung auf der der elektrischen Energiequelle abgewandt liegenden Teil der Busleitung unterbrochen ist, so dass die Busleitung ein offenes Leitungsende aufweist und für nachfolgende elektronische Sicherungen unterbrochen ist.

Zweckmäßig wird die Wechselspannung von der Steuereinheit ausgehend von der ersten Frequenz so zu einer zweiten Frequenz verändert, dass die zweite, dass die für die erste zu adressierende elektronische Sicherung ermittelte erste Phasenverschiebung zwischen Wechselspannung und Strom vorliegt. Vorteilhaft entscheidet die Steuereinheit anhand eines Vergleichs zwischen der zweiten und der dritten Frequenz, ob die erste zu adressierende elektronische Sicherung oder die zweite zu adressierende elektronische Sicherung entlang der Busleitung weiter entfernt von der Steuereinheit liegt. Dadurch ist ein einfaches Verfahren zur Bestimmung der Relativpositionen der zu adressierenden elektronischen Sicherungen gegeben. Bei der Adressierung der elektronischen Sicherungen der Gruppe können zunächst Namen für die zu adressierenden elektronischen Sicherungen vergeben werden und anschließend jedem Namen eine Position relativ zu den anderen elektronischen Sicherungen der Gruppe zugeordnet werden. Es kann aber auch vorgesehen sein, dass zunächst die Position der zu adressierenden elektronischen Sicherung bestimmt wird und der zu adressierenden elektronischen Sicherung dann ein Name zugewiesen wird. Dieser Name ist dann mit der Position verknüpft. Die Verknüpfung von Name und Position wird als Adresse bezeichnet. Der Begriff Name entspricht dem Begriff ID.

Insbesondere ist die Wechselspannung sinusförmig.

Vorteilhaft weist die Steuereinheit nach der Bestimmung der zweiten Frequenz zumindest der ersten zu adressierenden elektronischen Sicherung und der zweiten zu adressierenden elektronischen Sicherung über die Busleitung eine Adresse zu. Dabei wird diejenige elektronische Sicherung, die mit der höheren Frequenz verbunden ist, mit einer Position entlang der Busleitung näher an der Steuereinheit verknüpft. Dieser Vorgehensweise liegt die Tatsache zugrunde, dass bei einer längeren Leitung eine kleinere Frequenz der Wechselspannung erforderlich ist, um dieselbe Phasenverschiebung zwischen Wechselspannung und Strom zu erzielen, wie bei einer kürzeren Leitung.

Vorteilhaft ist die erste Frequenz so gewählt, dass die Phasenverschiebung ein Vielfaches von 90° beträgt. Insbesondere ist die erste Frequenz so gewählt, dass die Phasenverschiebung ein Vielfaches von 180°, zweckmäßig 180° beträgt. Dies hat den Vorteil, dass die Phasenverschiebungen jeweils zu Zeitpunkten gemessen werden können, zu denen die Spannung oder der Strom Null ist. Bei einer Phasenverschiebung von lediglich 90° oder beispielsweise von 270° kann der Realteil Null betragen.

Vorteilhaft wird zur Bestimmung der Phasenverschiebung die Stromstärke als zeitdiskretes Signal gemessen. Zweckmäßig wird zur Wahl der ersten Frequenz so, dass die erste Phasenverschiebung ein Vielfaches von 180°, insbesondere 180° beträgt, die Stromstärke bei einem Nulldurchgang der Wechselspannung gemessen. Insbesondere wird die Frequenz der Wechselspannung ausgehend von einer Frequenz mit einer Phasenverschiebung kleiner als 180° oder kleiner als 360° so verändert, dass die Stromstärke etwa Null, insbesondere Null beträgt. Auf diese Weise ist unkompliziert eine Ermittlung der ersten Frequenz so möglich, dass die Phasenverschiebung 180° beträgt. Zweckmäßig wird zur Bestimmung der zweiten Frequenz die Frequenz der Wechselspannung so gewählt, dass bei einem Nulldurchgang der Wechselspannung die Stromstärke etwa Null beträgt. Dadurch entspricht die Phasenverschiebung beim Anliegen der Wechselspannung mit der zweiten Frequenz auf einfache Weise der ersten Phasenverschiebung, in diesem Fall 180°.

Insbesondere wird die Stromstärke am Ort der Spannungserzeugung gemessen.

In alternativer dritter Variante der Erfindung ist jeder der mehreren elektronischen Sicherungen der Gruppe eine Adressierungseinrichtung zugeordnet. Zweckmäßig läuft bei der Adressierung der mehreren elektronischen Sicherungen der Gruppe für die Adressierung jeder elektronischen Sicherung je ein Adressierungssignal durch zumindest einen Teil der Busleitung. Insbesondere ist jede Adressierungseinrichtung so ausgelegt, dass sie eine Leitung des Adressierungssignals an die entlang der Busleitung unmittelbar benachbarte elektronische Sicherung der Gruppe unterbinden kann. Hierbei geht es insbesondere jeweils um denjenigen Nachbarn, der weiter von der elektronischen Energiequelle entfernt ist. Vorteilhaft ist die elektrische Schaltvorrichtung so ausgelegt, dass die Adressierungseinrichtung einer elektronischen Sicherung, die eine Adresse erhalten hat, anschließend bewirkt, dass die entlang der Busleitung unmittelbar benachbarte elektronische Sicherung der Gruppe adressiert wird. Insbesondere handelt es sich hierbei um die entlang der Busleitung unmittelbar benachbarte elektronische Sicherung, die weiter entfernt von der elektrischen Energiequelle entlang der Busleitung angeordnet ist als die zuvor adressierte elektronische Sicherung. Insbesondere wird hierbei wiederum ein Adressierungssignal zumindest über einen Teil der Busleitung zur Leitung der elektrischen Energie geleitet. Dadurch muss für die Adressierung der elektronischen Sicherung der Gruppe keine extra Leitung vorgesehen sein.

In vorteilhafter Weiterbildung der dritten Variante der Erfindung ist vorgesehen, dass alle Adressierungseinrichtungen eine Dämpfungseinrichtung besitzen. Insbesondere kann durch die Dämpfungseinrichtung einer bestimmten elektronischen Sicherung der Gruppe eine Leitung des Adressierungssignals zu der entlang der Busleitung unmittelbar zu der bestimmten elektronischen Sicherung benachbarten elektronischen Sicherung der Gruppe unterbunden werden. Durch die Dämpfungseinrichtung kann sichergestellt werden, dass zunächst nur die bestimmte elektronische Sicherung adressiert wird und keine der elektronischen Sicherungen der Gruppe, die bezüglich der Busleitung und der elektrischen Energiequelle nach der bestimmten elektronischen Sicherung liegen (also entlang der Busleitung weiter entfernt von der elektrischen Energiequelle bzw. der Steuereinheit). Zweckmäßig wirken bei der Adressierung der mehreren elektronischen Sicherungen der Gruppe über die Busleitung zunächst alle Dämpfungseinrichtungen, insbesondere in der Busleitung, derart, dass die Leitung eines Adressierungssignals in der Busleitung zwischen zwei entlang der Busleitung unmittelbar benachbarten elektronischen Sicherungen der Gruppe unterbunden ist. Die Steuereinheit sendet dann über die Busleitung ein erstes Adressierungssignal aus, das ungestört von den Dämpfungseinrichtungen zu der elektronischen Sicherung gelangt, die entlang der Busleitung am nächsten an der Steuereinheit liegt. Auf diese Weise wird dieser elektronischen Sicherung eine Adresse zugewiesen, die mit der entlang der Busleitung am nächsten zur Steuereinheit liegenden Position verknüpft ist. Zweckmäßig unterbindet die zu der adressierten elektronischen Sicherung gehörige Dämpfungseinrichtung eine Leitung des ersten Adressierungssignals an die entlang der Busleitung unmittelbar benachbart zu der adressierten elektronischen Sicherung liegende elektronische Sicherung.

Vorteilhaft ist vorgesehen, dass bei der Adressierung der mehreren elektronischen Sicherungen der Gruppe, nachdem einer bestimmten elektronischen Sicherung eine Adresse zugewiesen wurde, diese bestimmte elektronische Sicherung initiiert, dass die der bestimmten elektronischen Sicherung zugehörige Dämpfungseinrichtung ausgeschaltet wird und ein weiteres Adressierungssignal von der Steuereinheit ausgesendet wird. Alternativ kann vorgesehen sein, dass bei der Adressierung der mehreren elektronischen Sicherungen der Gruppe, nachdem einer bestimmten elektronischen Sicherung eine Adresse zugewiesen wurde, diese bestimmte elektronische Sicherung initiiert, dass ein weiteres Adressierungssignal von der zu der zuletzt adressierten elektronischen Sicherung gehörigen Adressierungseinrichtung generiert wird und dieses weitere Adressierungssignal der Busleitung zur Adressierung der entlang der Busleitung unmittelbar zu der zuletzt adressierten elektronischen Sicherung benachbarten elektronischen Sicherung der Gruppe zugeleitet wird. Insbesondere wird dieses Adressierungssignal dem Teil der Busleitung zugeleitet, der bezüglich der Steuereinheit entlang der Busleitung hinter der zu der zuletzt adressierten elektronischen Sicherung gehörigen Dämpfungseinrichtung liegt. Vorteilhaft ist die elektrische Schaltvorrichtung so ausgelegt, dass dann mittels des weiteren Adressierungssignals der entlang der Busleitung unmittelbar zu der zuletzt adressierten elektronischen Sicherung benachbarten elektronischen Sicherung über die Busleitung eine Adresse zugewiesen wird, die mit der entlang der Busleitung zur zuletzt adressierten elektronischen Sicherung liegenden Position verknüpft ist. Diese Adresse ist mit einer Position verknüpft, die entlang der Busleitung weiter entfernt von der elektrischen Energiequelle liegt als die zuvor adressierte elektronische Sicherung.

Insbesondere ist die elektrische Schaltvorrichtung so ausgelegt, dass die Adressierung der Gruppe der mehreren elektronischen Sicherungen sukzessive so lange fortgesetzt wird, bis alle der mehreren elektronischen Sicherungen der Gruppen adressiert sind. Durch dieses Adressierungsverfahren ist eine einfache und schnelle Adressierung aller elektronischen Sicherungen ohne zusätzliche Kommunikationsleitung möglich. Es kann die bereits zur Leitung der elektrischen Energie genutzte Busleitung für die Adressierung der elektronischen Sicherungen der Gruppe verwendet werden.

Bei der Beschreibung der Erfindung als Verfahren zur Adressierung von elektronischen Sicherungen in einer elektrischen Schaltvorrichtung umfasst die elektrische Schaltvorrichtung:
- mehrere elektrische Verbraucher,
- eine elektrische Energiequelle zur Versorgung der mehreren elektrischen Verbraucher mit elektrischer Energie,
- eine Busleitung zur Leitung der elektrischen Energie von der elektrischen Energiequelle zu den mehreren elektrischen Verbrauchern, wobei die mehreren elektrischen Verbraucher mit der Busleitung, insbesondere jeweils über Stichleitungen, verbunden sind,
- mehrere elektronische Sicherungen, die elektrisch zwischen der elektrischen Energiequelle und den mehreren elektrischen Verbrauchern, insbesondere in den Stichleitungen, angeordnet sind, wobei die mehreren elektronischen Sicherungen getrennt voneinander ausgebildet sind, wobei die mehreren elektronischen Sicherungen verteilt in der elektrischen Schaltvorrichtung in der elektrischen Schaltvorrichtung angeordnet sind.

Gemäß dem Verfahren erfolgt eine Adressierung der mehreren elektronischen Sicherungen über die Busleitung. Auch die anderen beschriebenen gegenständlichen Merkmale können in Form eines Verfahrens durchgeführt werden.

Ausführungsbeispiele der Erfindung werden im Folgenden anhand der Zeichnung erläutert. Es zeigen:
- Fig. 1: eine schematische Darstellung einer elektrischen Schaltvorrichtung mit mehreren elektrischen Verbrauchern und mehreren elektronischen Sicherungen, die verteilt in der elektrischen Schaltvorrichtung angeordnet sind und über eine Busleitung von einer elektrischen Energiequelle mit elektrischer Energie versorgt werden,
- Fig. 2: eine schematische Darstellung einer elektrischen Schaltvorrichtung gemäß Fig. 1, wobei die elektrische Schaltvorrichtung gemäß Fig. 2 zusätzlich eine separat von der Busleitung aus gebildete Datenleitung besitzt, die eine Steuereinheit mit den elektronischen Sicherungen verbindet,
- Fig. 3, Fig. 4, Fig. 6 und Fig. 7: schematische Darstellungen verschiedener Ausgestaltungen der Schaltvorrichtung aus Fig. 1 mit verschiedenen Vorrichtungen zur Adressierung der elektronischen Sicherungen über die Busleitung und
- Fig. 5: eine schematische Darstellung eines Smith-Diagramms zur Veranschaulichung der Adressierung der elektronischen Sicherungen über die Busleitung mittels der elektrischen Schaltvorrichtung aus Fig. 1 mit der Vorrichtung zur Adressierung der elektronischen Sicherungen gemäß Fig. 4.

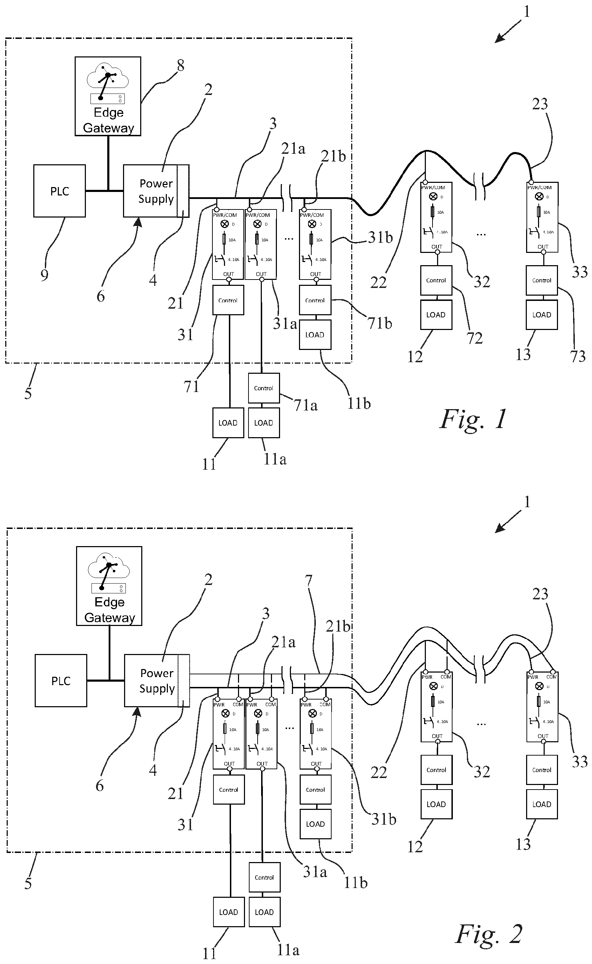

Fig. 1 zeigt eine elektrische Schaltvorrichtung 1. Die elektrische Schaltvorrichtung 1 kann beispielsweise in einer industriellen Anlage eingesetzt werden, z. B. in einer Automatisierungsanlage oder einer Anlage der Intralogistik. Derartige industrielle Anlagen können z. B. Produktionsanlagen und/oder Förderanlagen sein. Die elektrische Schaltvorrichtung 1 umfasst mehrere elektrische Verbraucher 11, 11a, 11b, 12 und 13. Die mehreren elektrischen Verbraucher 11, 11a, 11b, 12 und 13 sind verteilt in der elektrischen Schaltvorrichtung 1 angeordnet. Die elektrischen Verbraucher 11, 11a, 11b, 12 und 13 können Aktoren und/oder Sensoren sein. Die elektrische Schaltvorrichtung 1 umfasst eine elektrische Energiequelle 2.

Die elektrische Energiequelle 2 dient zur Versorgung der mehreren elektrischen Verbraucher 11, 11a, 11b, 12 und 13 mit elektrischer Energie. Im Ausführungsbeispiel ist die elektrische Energiequelle 2 eine Spannungsquelle. Insbesondere ist die elektrische Energiequelle 2 ein Netzteil. Im Ausführungsbeispiel ist die elektrische Energiequelle 2 ein AC/DC-Netzteil. Es kann sich bei dem Netzteil aber auch um ein DC/DC-Netzteil handeln. Das Gehäuse 6 der elektrischen Energiequelle 2 kann in der Schutzart IP67 (DIN EN 60529 (VDE 0470-1):2014-09 Schutzarten durch Gehäuse (IP-Code) (IEC 60529:1989 + A1:1999 + A2:2013)) ausgeführt sein. Dadurch ist es möglich, die elektrische Energiequelle 2 auch außerhalb eines Schaltschranks anzuordnen. Die elektrische Energiequelle 2 versorgt die mehreren elektrischen Verbraucher 11, 11a, 11b, 12 und 13 mit Gleichspannung. Die Gleichspannung ist eine Schutzkleinspannung. Im Ausführungsbeispiel entspricht die Schutzkleinspannung einer Nennspannung von 24 V. Die Schutzkleinspannung kann aber auch einer Nennspannung von 48 Ventsprechen.

Die elektrische Schaltvorrichtung 1 umfasst eine Busleitung 3. Die Busleitung 3 dient zur Leitung der elektrischen Energie von der elektrischen Energiequelle 2 zu den mehreren elektrischen Verbrauchern 11, 11a, 11b, 12 und 13. Die mehreren elektrischen Verbraucher 11, 11a, 11b, 12 und 13 sind jeweils mit der Busleitung 3 verbunden, insbesondere über Stichleitungen 21, 21a, 21b, 22 und 23.

Die elektrische Schaltvorrichtung 1 umfasst eine Gruppe mehrerer elektronischer Sicherungen 31, 31a, 31b, 32 und 33. Die elektronischen Sicherungen 31, 31a, 31b, 32 und 33 der Gruppe sind elektrisch zwischen der elektrischen Energiequelle 2 und den mehreren elektrischen Verbrauchern 11, 11a, 11b, 12 und 13, insbesondere in den Stichleitungen 21, 21a, 21b, 22 und 23 angeordnet. Die elektronischen Sicherungen 31, 31a, 31b, 32 und 33 sind getrennt voneinander ausgebildet. Die elektronischen Sicherungen 31, 31a, 31b, 32 und 33 sind verteilt in der elektrischen Schaltvorrichtung 1 angeordnet.

Im Ausführungsbeispiel ist die elektrische Schaltvorrichtung 1 zumindest teilweise in einem Schaltschrank 5 angeordnet. Die elektronischen Sicherungen 31, 31a, 31b, 32 und 33 sind zumindest teilweise außerhalb des Schaltschranks 5 angeordnet. Im Ausführungsbeispiel sind die elektronischen Sicherungen 31, 31a und 31b der mehreren elektronischen Sicherungen innerhalb des Schaltschranks 5 angeordnet. Es kann aber auch vorgesehen sein, dass die der mehreren elektronischen Sicherungen 31, 31a, 31b, 32 und 33 der Gruppe ausschließlich außerhalb eines Schaltschranks 5 angeordnet sind. Es kann ebenso vorgesehen sein, dass überhaupt kein Schaltschrank 5 vorhanden ist und dass die Schaltvorrichtung 1 vollständig außerhalb eines Schaltschranks angeordnet ist. Im Ausführungsbeispiel sind zumindest die elektronischen Sicherungen 32 und 33 der Gruppe der mehreren elektronischen Sicherungen 31, 31a, 31b, 32 und 33 außerhalb des Schaltschranks 5 angeordnet. Die elektronischen Sicherungen 32 und 33 sind im Feld der industriellen Anlage verteilt angeordnet. Im Ausführungsbeispiel sind die elektronischen Sicherungen 31, 31a und 31b, insbesondere deren Gehäuse, in der Schutzart IP20 (DIN EN 60529 (VDE 0470-1):2014-09 Schutzarten durch Gehäuse (IP-Code) (IEC 60529:1989 + A1:1999 + A2:2013)) ausgeführt. Die elektronischen Sicherungen 32 und 33, insbesondere deren Gehäuse, sind in der Schutzart IP54 oder der Schutzart IP67 (DIN EN 60529 (VDE 0470-1):2014-09 Schutzarten durch Gehäuse (IP-Code) (IEC 60529:1989 + A1:1999 + A2:2013)) ausgeführt.

Die elektrische Schaltvorrichtung 1 umfasst eine Steuereinheit 4. Die Steuereinheit 4 ist in der Busleitung 3 angeordnet. In sämtlichen Ausführungsbeispielen ist die elektrische Schaltvorrichtung 1 so ausgelegt, dass die Steuereinheit 4 als Gateway mit den verteilten mehreren elektronischen Sicherungen 31, 31a, 31b, 32, 33 der Gruppe kommunizieren kann. Die Steuereinheit 4 ist in die elektrische Energiequelle 2 integriert.

Die elektrische Energiequelle 2 umfasst ein Gehäuse 6. Zweckmäßig ist die Steuereinheit 4 in dem Gehäuse 6 der elektrischen Energiequelle 2 angeordnet.

Das Gehäuse 6 ist allseitig geschlossen. Das Gehäuse 6 ist in der Schutzart IP20 bis IP69K ausgeführt. Bevorzugt ist das Gehäuse 6 in der Schutzart IP54 bis IP68 ausgeführt. Diese Schutzarten sind in der Norm "DIN EN 60529 (VDE 0470-1): 2014-09 Schutzarten durch Gehäuse (IP-code)" definiert.

Das Gehäuse 6 besitzt einen Ausgang. Durch den Ausgang hindurch ist die elektrische Energiequelle 2 mit der Busleitung 3 verbunden. Die elektrische Energiequelle 2 ist über eine Energieleitung elektrisch mit dem Ausgang verbunden. Die elektrische Energiequelle stellt am Ausgang eine geregelte und überwachte Spannung zur Verfügung. In der Energieleitung ist als weiteres Bauteil ausschließlich die Steuereinheit 4 angeordnet. Die Steuereinheit 4 ist elektrisch zwischen dem Ausgang des Gehäuses 6 und der Energiequelle 2 angeordnet. Im Ausführungsbeispiel ist die Energiequelle 2 eine Spannungsquelle.

Die elektrische Energiequelle 2 und die Steuereinheit 4 sind als Baueinheit ausgebildet. Die Baueinheit ist als Ganzes in die elektrische Schaltvorrichtung 1 einsetzbar und/oder entnehmbar.

Die elektrische Schaltvorrichtung 1 ist so ausgelegt, dass die Steuereinheit 4 so mit den verteilten, mehreren elektronischen Sicherungen 31, 31a, 31b, 32, 33 der Gruppe kommunizieren kann, dass die mehreren elektronischen Sicherungen 31, 31a, 31b, 32, 33 der Gruppe mittels der Steuereinheit 4 adressierbar sind. Eine Adressierung der mehreren elektronischen Sicherungen 31, 31a, 31b, 32, 33 der Gruppe kann mittels der Steuereinheit erfolgen.

Gemäß der Ausführung nach Fig. 1 ist die Steuereinheit 4 so ausgelegt, dass mittels der Steuereinheit 4 eine Adressierung der mehreren elektronischen Sicherungen 31, 31a, 31b, 32 und 33 der Gruppe über die Busleitung 3 zur Leitung der elektrischen Energie erfolgen kann. Im Ausführungsbeispiel nach Fig. 1 ist für die Adressierung sämtlicher der mehreren elektronischen Sicherungen 31, 31a, 31b, 32 und 33 keine zusätzliche Datenleitung erforderlich. Die Adressierung sämtlicher elektronischer Sicherungen 31, 31a, 31b, 32 und 33 erfolgt über die Busleitung 3 zur Leitung der elektrischen Energie von der elektrischen Energiequelle 2 zu den mehreren elektrischen Verbrauchern 11, 11a, 11b, 12 und 13.

Im Ausführungsbeispiel erfolgt die Adressierung der mehreren elektronischen Sicherungen 31, 31a, 31b, 32, 33 der Gruppe durch Modulation des in der Busleitung 3 geführten Signals zur Übertragung der elektrischen Energie von der elektrischen Energiequelle 2 zu den elektrischen Verbrauchern 11, 11a, 11b, 12, 13. Dieses Signal zur Übertragung der elektrischen Energie wird als Träger bezeichnet. Auf den Träger wird das zu übertragende Nutzsignal aufmoduliert, insbesondere das Signal zur Adressierung einer elektronischen Sicherung aus der Gruppe der mehreren elektronischen Sicherungen 31, 31a, 31b, 32, 33. Als Modulationsverfahren kommen insbesondere die Amplitudenumtastung, die Frequenzumtastung und die Phasenumtastung in Frage. Als Frequenzumtastungs-Modulationsverfahren ist der Bell 202-Modemstandard oder ein höherer Standard nutzbar. Auch aufwändigere Verfahren können zur Modulation des Energiesignals genutzt werden. Diesbezüglich sind die Quadraturamplituden-Modulation und die Quadraturphasen-Umtastung zu nennen.

Die Steuereinheit 4 kommuniziert auf der einen Seite mit den elektronischen Sicherungen 31, 31a, 31b, 32, 33 und auf der anderen Seite mit Datenquellen und Konsumenten. Hierzu zählen beispielsweise das Edge Gateway 8 und die Steuerung 9. Das Edge Gateway 8 dient zur Kommunikation mit der Cloud. Die Kommunikation mit diesen Geräten, nämlich mit dem Edge Gateway 8 und der Steuerung 9, erfolgt auf einer übergeordneten Ebene. Zur Kommunikation auf dieser Ebene können ethernetbasierte Feldbusse oder IO-Links, sowie Feldbusprotokolle wie ProfiNet, EtherCAT, EtherNet/IP, OPC/LTA oder MQTT vorgesehen sein.

Mit den mehreren elektronischen Sicherungen 31, 31a, 31b, 32 und 33 kommuniziert die Steuereinheit 4 auf einer untergeordneten Ebene. Die Steuereinheit sammelt die hier von den mehreren elektronischen Sicherungen 31, 31a, 31b, 32, 33 übermittelten Daten und übergibt sie im Rahmen der Kommunikation auf der höheren Ebene an die Datenquellen und Konsumenten, ggf. nach Weiterverarbeitung.

Die Steuereinheit 4 umfasst im Ausführungsbeispiel ein Gateway. Mit Gateway wird eine Komponente bezeichnet, welche zwischen zwei Systemen eine Verbindung herstellt. Das Gateway stellt die Brücke zur Kommunikation zwischen mehreren internen oder auch externen Netzwerkabschnitten dar.

Zwischen der elektronischen Sicherung 31, 31a, 31b, 32, 33 und dem elektrischen Verbraucher 11, 11a, 11b, 12, 13 ist eine Feldsteuerung 71, 71a, 71b, 72, 73 vorgesehen. Die Feldsteuerung 71, 71a, 71b, 72, 73 ist in der jeweiligen Stichleitung 21, 21a, 21b, 22, 23 angeordnet. Bei der Feldsteuerung 71, 71a, 71b, 72, 73 kann es sich um eine Motorsteuerung, einen Schütz oder dergleichen handeln.

Bei der Adressierung der Gruppe der mehreren elektronischen Sicherungen 31, 31a, 31b, 32, 33 wird eine Position der zu adressierenden elektronischen Sicherung 31, 31a, 31b, 32, 33 aus der Gruppe relativ zu den übrigen elektronischen Sicherungen 31, 31a, 31b, 32, 33 aus der Gruppe in der elektrischen Schaltvorrichtung 1 bestimmt und anschließend eine Adresse an die zu adressierende elektronische Sicherung 31, 31a, 31b, 32, 33 vergeben. Die Adressvergabe erfolgt im Ausführungsbeispiel durch die Steuereinheit 4. Es kann aber auch vorgesehen sein, dass die Adressvergabe durch die elektronische Sicherung 31, 31a, 31b, 32, 33 selbst erfolgt. Die Adresse setzt sich aus einem Name der zu adressierenden elektronischen Sicherung 31, 31a, 31b, 32, 33 und ihrer Position zusammen. Der Name wird auch als ID bezeichnet. Bei der Adressierung wird eine Position der elektronischen Sicherung 31, 31a, 31b, 32, 33 in der Schaltvorrichtung 1, insbesondere entlang der Busleitung 3 relativ zu den anderen elektronischen Sicherungen 31, 31a, 31b, 32, 33 der Gruppe bestimmt. Die ID wird mit dieser Position verknüpft. Die Adresse wird vergeben.

In den Ausführungsbeispielen ist die elektrische Schaltvorrichtung 1 so ausgelegt, dass die Adressierung der mehreren elektronischen Sicherungen 31, 31a, 31b, 32, 33 sukzessive in der Weise erfolgt, dass unmittelbar nacheinander bezüglich der Busleitung 3 unmittelbar benachbarte elektronische Sicherungen 31, 31a, 31b, 32, 33 aus der Gruppe der mehreren elektronischen Sicherungen 31, 31a, 31b, 32, 33 adressiert werden.

Fig. 2 zeigt eine Variante der Schaltvorrichtung 1 nach Fig. 1. Die Beschreibung zu Fig. 1 trifft auf Fig. 2 zu, sofern nicht die Kommunikation der mehreren elektronischen Sicherungen 31, 31a, 31b, 32, 33 untereinander und/oder mit der Steuereinheit 4 über die Busleitung 3 zur Leitung der elektrischen Energie betroffen ist. Dies betrifft insbesondere die Adressierung der mehreren elektronischen Sicherungen 31, 31a, 31b, 32, 33 über die Busleitung 3 zur Leitung der elektrischen Energie. Im Ausführungsbeispiel nach Fig. 2 ist alternativ zum Ausführungsbeispiel nach Fig. 1 für die Kommunikation der mehreren elektronischen Sicherungen 31, 31a, 31b, 32, 33 untereinander und/oder mit der Steuereinheit 4 eine separat von der Busleitung 3 zur Leitung der elektrischen Energie ausgebildete Datenleitung 7 vorgesehen.

Die Steuereinheit 1 ist zur Kommunikation mit der Gruppe der mehreren elektronischen Sicherungen 31, 31a, 31b, 32, 33 über die von der Busleitung 3 zur Leitung der elektrischen Energie getrennt ausgebildete Datenleitung 7 mit den verteilten, mehreren elektronischen Sicherungen 31, 31a, 31b, 32, 33 der Gruppe verbunden. In Fig. 2 wird die Busleitung 3 ausschließlich zur Übertragung von Energie, also als leistungsführende Leitung genutzt. Eine Übertragung von Daten über die Busleitung 3 ist im Ausführungsbeispiel nach Fig. 2 nicht vorgesehen.

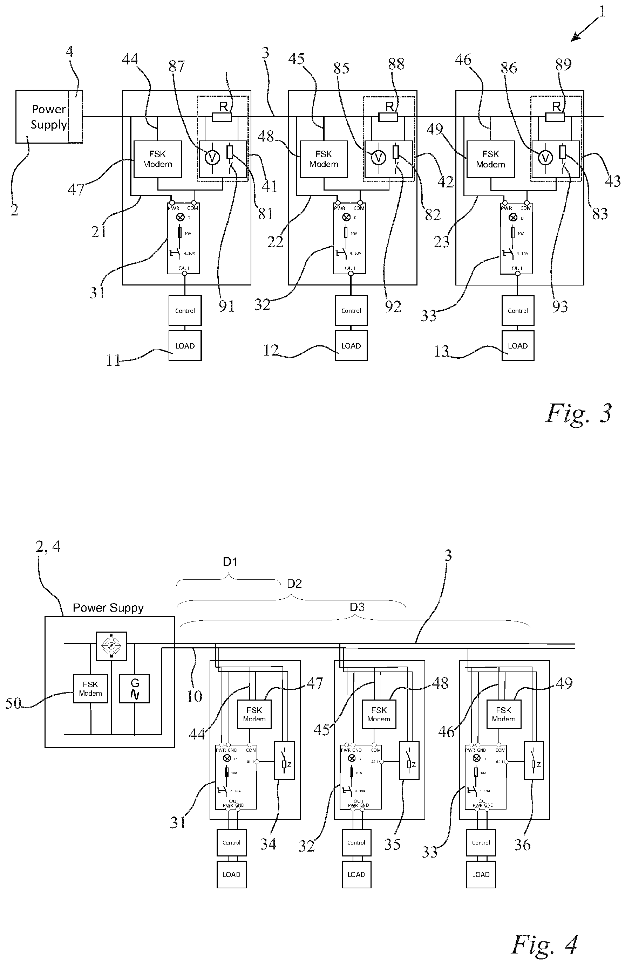

Für die Realisierung der Adresszuweisung basierend auf der Ausführung nach Fig. 1 kann die elektrische Schaltvorrichtung 1 verschiedenartig ausgebildet sein. Die Fig. 3, 4, 6 und 7 zeigen die entsprechenden Details der Schaltvorrichtung 1 aus Fig. 1 in den verschiedenen Varianten. In Fig. 1 ist der Bereich der Schaltvorrichtung 1 zwischen der Busleitung 3 und den mehreren elektronischen Sicherungen 31, 31a, 31b, 32, 33 nicht detailliert dargestellt. Dieser Bereich kann gemäß einer der Fig. 3, 4, 6 oder 7 gestaltet sein. Hierbei sind elektrisch zwischen der Busleitung 3 und der jeweiligen elektronischen Sicherung 31, 31a, 31b, 32 oder 33 verschiedene Vorrichtungen angeordnet. Diese Vorrichtungen sind in den Fig. 3, 4, 6 und 7 beispielhaft für einzelne elektronische Sicherungen dargestellt. Die Gestaltung für eine elektronische Sicherung findet auch für die jeweils anderen elektronischen Sicherungen der elektrischen Schaltvorrichtung Anwendung.

Die Adressierung der mehreren elektronischen Sicherungen 31, 31a, 31b, 32, 33 mittels der Vorrichtung aus Fig. 3 kann als Strommessadressierung bezeichnet werden. Bei dieser Ausführung der elektrischen Schaltvorrichtung 1 umfasst die elektrische Schaltvorrichtung 1 mehrere Strommesseinrichtungen 41, 42, 43. Jeder der mehreren elektronischen Sicherungen 31, 32, 33 ist jeweils eine Strommesseinrichtung 41, 42, 43 zugeordnet. Die Strommesseinrichtung 41, 42, 43 umfasst einen Belastungswiderstand 81, 82, 83. Der Strommesseinrichtung 41 ist der Belastungswiderstand 81, der Strommesseinrichtung 42 der Belastungswiderstand 82 und der Strommesseinrichtung 43 der Belastungswiderstand 83 zugehörig. Insbesondere ist der Belastungswiderstand 81, 82, 83 in der Busleitung 3 angeordnet. Zumindest ein Teil der Gruppe der mehreren elektronischen Sicherungen 31, 32, 33, im Ausführungsbeispiel nach Fig. 3 alle elektronischen Sicherungen 31, 32, 33 der Gruppe (auch die in Fig. 3 nicht dargestellten elektronischen Sicherungen 31a, 31b), gehören einer Anfangsbelastungsgruppe an. Die Anfangsbelastungsgruppe umfasst:
- die entlang der Busleitung 3 am weitesten entfernt von der elektrischen Energiequelle 2 angeordnete elektronische Sicherung 33 der Gruppe der mehreren elektronischen Sicherungen 31, 32, 33 und
- zumindest eine weitere elektronische Sicherung 31, 32, im Ausführungsbeispiel nach Fig. 3 alle elektronischen Sicherungen 31, 32, 33 (auch die im Ausführungsbeispiel nach Fig. 3 nicht dargestellten elektronischen Sicherungen 31a, 31b) der Gruppe der mehreren elektronischen Sicherungen 31, 32, 33.

Die elektrische Schaltvorrichtung 1, insbesondere die Steuereinheit 4 ist so ausgelegt, dass bei der Adressierung der mehreren elektronischen Sicherungen 31, 32, 33 der Gruppe zunächst alle Belastungswiderstände 81, 82, 83 der Anfangsbelastungsgruppe auf die Busleitung 3 geschaltet sind und die elektrische Energiequelle 2 belasten. Die den elektronischen Sicherungen 31, 32, 33 der Anfangsbelastungsgruppe zugeordneten Strommesseinrichtungen 41, 42, 43 messen den Strom in der Busleitung 3 nach der jeweils zugehörigen elektronischen Sicherung 31, 32, 33. Die Steuereinheit 4 weist derjenigen elektronischen Sicherung 33 der Anfangsbelastungsgruppe, der ein Strommesswert unterhalb eines Leerlaufstromwerts der elektrischen Schaltvorrichtung 1 zugehörig ist, über die Busleitung 3 eine Adresse zu, die mit der entlang der Busleitung 3 am weitesten von der elektrischen Energiequelle 2 entfernten Position verknüpft ist. Dieser Strommesswert entspricht insbesondere dem kleinsten von den Strommesseinrichtungen 41, 42, 43 gemessenen Strommesswert. Insbesondere existiert nur ein einziger Strommesswert unterhalb des Leerlaufstromwerts. Im Leerlauf ist an die elektrische Energiequelle 2 kein elektrischer Verbraucher 11, 12, 13 angeschlossen bzw. wird keiner der elektrischen Verbraucher 11, 12, 13 im eingeschalteten Zustand betrieben. Bei der Adressierung der elektronischen Sicherung 31, 32, 33 sind die elektrischen Verbraucher 11, 12, 13, entweder von der Busleitung 3 getrennt oder werden nicht im eingeschalteten Zustand betrieben. Anders ausgedrückt, die elektrischen Verbraucher 11, 12, 13 ziehen während der Adressierung der elektronischen Sicherungen 31, 32, 33 keinen elektrischen Strom aus der elektrischen Energiequelle 2.

Die Strommesseinrichtung 41, 42, 43 umfasst im Ausführungsbeispiel einen Schalter 91, 92, 93. Der Schalter 91 ist der Strommesseinrichtung 41, der Schalter 92 der Strommesseinrichtung 42 und der Schalter 93 der Strommesseinrichtung 43 zugeordnet. Mittels des Schalters 91, 92, 93 kann der jeweils zugeordnete Belastungswiderstand 81, 82, 83 auf, insbesondere in, die Busleitung 3 und aus der Busleitung 3 geschaltet werden. Im Ausführungsbeispiel nach Fig. 3 ist der Belastungswiderstand 81, 82, 83 bei geöffnetem Schalter 91, 92, 93 auf die Busleitung 3 geschaltet. Bei geschlossenem Schalter 91, 92, 93 ist der jeweils zugeordnete Belastungswiderstand 81, 82, 83 nicht auf die Busleitung 3 geschaltet. Durch die Zuschaltung des Belastungswiderstands 81, 82, 83 wird eine definierte Last auf die Busleitung 3 geschaltet. Diese definierte Last eines einzigen Belastungswiderstands 81, 82, 83 ist größer als die gesamte zu erwartende Last, wenn die elektrische Schaltvorrichtung 1 im Leerlauf betrieben wird. Der Belastungswiderstand 81, 82, 83 ist ein ohmscher Widerstand.

Die elektronische Sicherung 31, 32, 33 ist über eine Verbindungsleitung 44, 45, 46 mit der Busleitung 3 verbunden. Die Verbindungsleitung 44 ist der elektronischen Sicherung 31, die Verbindungsleitung 45 der elektronischen Sicherung 32 und die Verbindungsleitung 46 der elektronischen Sicherung 33 zugeordnet. In der Verbindungsleitung 44, 45, 46 ist ein Umtastmodem 47, 48, 49 angeordnet. Das Umtastmodem 47, 48, 49 dient zur Kommunikation der elektronischen Sicherung 31, 32, 33 mit der Steuereinheit 4. Im Ausführungsbeispiel erfolgt die Kommunikation mittels Frequenzumtastung. Dementsprechend ist das Umtastmodem 47, 48, 49 ein Frequenzumtastmodem. Es kann aber auch Amplitudenumtastung oder Phasenumtastung als Modulationsverfahren vorgesehen sein. Dann ist das Modem dementsprechend ein Amplitudenumtastmodem oder ein Phasenumtastmodem. Dies gilt auch für die anderen Ausführungsbeispiele. In den Ausführungsbeispielen ist das Umtastmodem 47 der elektronischen Sicherung 31, das Umtastmodem 48 der elektronischen Sicherung 32 und das Umtastmodem 49 der elektronischen Sicherung 33 zugeordnet. Die elektronische Sicherung 31, 32, 33 kann mittels des Umtasttastmodems 47, 48, 49 ein Signal auf das in der Busleitung 3 laufende elektrische Signal aufmodulieren. Die elektronische Sicherung 31, 32, 33 kann mittels des Umtastmodems 47, 48, 49 ein auf das in der Busleitung 3 laufende elektrische Signal aufmoduliertes Signal empfangen oder demodulieren. Dies erfolgt mittels Frequenzumtastung. Hierdurch können Daten zwischen der elektronischen Sicherung 31, 32, 33 und der Steuereinheit 4 ausgetauscht werden. Insbesondere können Daten von der elektronischen Sicherung 31, 32, 33 zur Steuereinheit 4 übertragen werden. Im Ausführungsbeispiel nach Fig. 3 wird das Umtastmodem 47, 48, 49 zur Übertragung der jeweiligen Strommesswerte an die Steuereinheit 4 genutzt. Die Steuereinheit 4 kann die so erhaltenen Strommesswerte mit dem Leerlaufstromwert vergleichen und derjenigen elektronischen Sicherung 33, von der ein Strommesswert unterhalb des Leerlaufstromwerts übermittelt wird, die Adresse zuweisen, die mit der entlang der Busleitung 3 am weitesten von der elektrischen Energiequelle 22 entfernten Position verknüpft ist. Es kann aber auch vorgesehen sein, dass die elektronischen Sicherungen 31, 32, 33 selbst diesen Vergleich vornehmen.

Die Strommesseinrichtung 41, 42, 43 umfasst ein Spannungsmessgerät 84, 85, 86. Das Spannungsmessgerät 84 ist der Strommesseinrichtung 41, das Spannungsmessgerät 85 der Strommesseinrichtung 42 und das Spannungsmessgerät 86 der Strommesseinrichtung 43 zugeordnet. Mittels des Spannungsmessgeräts 84, 85, 86 wird die an einem zugeordneten Messwiderstand 87, 88, 89 abfallende Spannung gemessen und so die Stromstärke in der Busleitung 3 bestimmt. Der Messwiderstand 87, 88, 89 ist in der Busleitung 3 angeordnet. Der Messwiderstand 87 ist der Strommesseinrichtung 41, der Messwiderstand 88 der Strommesseinrichtung 42 und der Messwiderstand 89 der Strommesseinrichtung 43 zugeordnet.

Bei der Adressierung der Gruppe der mehreren elektronischen Sicherungen 31, 32, 33 gemäß der Strommessadressierung wird, nachdem einer elektronischen Sicherung eine Adresse zugewiesen wurde, der zugehörige Belastungswiderstand 81, 82, 83 von der Busleitung 3 getrennt. Im Ausführungsbeispiel nach Fig. 3 geschieht dies durch Überbrücken des Belastungswiderstands 81, 82, 83. Bei der weiteren Adressierung bleibt der Belastungswiderstand 81, 82, 83 getrennt. Bei der weiteren Adressierung der Gruppe der mehreren elektronischen Sicherungen 31, 32, 33 ist die elektrische Energiequelle 2 durch die weiterhin auf die Busleitung 3 geschalteten Belastungswiderstände 81, 82, 83 der Anfangsbelastungsgruppe belastet. Im Ausführungsbeispiel nach Fig. 3 wird beispielsweise zuerst die elektronische Sicherung 33 adressiert. Anschließend wird der zugehörige Belastungswiderstand 83 von der Busleitung 3 durch Überbrücken mittels Schließen des zugehörigen Schalters 93 getrennt. Bei der weiteren Adressierung der Gruppe der mehreren elektronischen Sicherungen 31, 32, 33 belasten die übrigen Belastungswiderstände, in Fig. 3 die Belastungswiderstände 81 und 82 die elektrische Energiequelle 2 weiterhin. Die den elektronischen Sicherungen 31, 32, 33 der Anfangsbelastungsgruppe zugeordneten Strommesseinrichtungen 41, 42, 43 messen den Strom in der Busleitung 3 nach der jeweils zugehörigen elektronischen Sicherung 31, 32, 33. Dies gilt insbesondere für die Strommesseinrichtungen 41 und 42, deren Belastungswiderstände 81 und 82 noch auf die Busleitung 3 geschaltet sind. Die Steuereinheit 4 weist derjenigen elektronischen Sicherung 31, 32 der elektronischen Sicherungen 31, 32 der Anfangsbelastungsgruppe mit weiterhin auf die Busleitung 3 geschalteten Belastungswiderständen 81, 82, der ein Strommesswert unterhalb des Leerlaufstromwerts der elektrischen Schaltvorrichtung 1 zugehörig ist, über die Busleitung 3 eine Adresse zu. Diese Adresse ist mit der entlang der Busleitung 3 am weitesten von der elektrischen Energiequelle 2 entfernten Position der elektronischen Sicherungen 31, 32 der Anfangsbelastungsgruppe mit weiterhin auf die Busleitung 3 geschalteten Belastungswiderständen 81, 82 verknüpft. Wiederum entspricht der Strommesswert unterhalb des Leerlaufstromwerts dem kleinsten Strommesswert, den die Strommesseinrichtungen 41, 42 mit weiterhin auf die Busleitung 3 geschalteten Belastungswiderständen 81, 82 messen. Wiederum existiert nur ein einziger Strommesswert unterhalb des Leerlaufstromwerts. Im Ausführungsbeispiel nach Fig. 3 wird, nachdem die entlang der Busleitung 3 am weitesten von der Steuereinheit 4 entfernt liegende elektronische Sicherung 33 adressiert wurde, die elektronische Sicherung 32 adressiert. Die elektronische Sicherung 32 ist die elektronische Sicherung, die am weitesten von der Steuereinheit 4 entfernt liegt und noch nicht adressiert wurde. Wie zuvor wird nach der Adressierung der elektronischen Sicherung 32 der zugehörige Belastungswiderstand 82 von der Busleitung 3 getrennt. Auch dieser Belastungswiderstand 82 bleibt bei der weiteren Adressierung getrennt. Die Adressierung der Gruppe der mehreren elektronischen Sicherungen 31, 32, 33 erfolgt so lange, bis alle Belastungswiderstände 81, 82, 83 der Anfangsbelastungsgruppe von der Busleitung 3 getrennt sind.

Diejenige elektronische Sicherung 31, 32, 33 aus der Anfangsbelastungsgruppe, deren Belastungswiderstand 81, 82, 83 auf die Busleitung 3 geschaltet ist, und der ein Strommesswert unterhalb des Leerlaufstromwerts der elektrischen Schaltvorrichtung 1 zugehörig ist, sendet ein Signal zur Adressanfrage an die Steuereinheit 4. Im Ausführungsbeispiel nach Fig. 3 geschieht dies durch das jeweilige Umtastmodem 47, 48, 49. Nach Erhalt dieses Signals zur Adressanfrage sendet die Steuereinheit 4 an die entsprechende elektronische Sicherung 31, 32, 33 ein Adressierungssignal zur Adressierung der elektronischen Sicherung 31, 32, 33, wobei die Adresse der elektronischen Sicherung 31, 32, 33 mit der ermittelten Relativposition relativ zu den anderen elektronischen Sicherungen 31, 32, 33 verknüpft wird. Auf diese Weise wird die entsprechende elektronische Sicherung 31, 32, 33 adressiert.

Fig. 4 zeigt eine alternative Ausführung des Bereichs zwischen der Busleitung 3 und den elektronischen Sicherungen 31, 31a, 31b, 32, 33 der elektrischen Schaltvorrichtung aus Fig. 1. Wiederum sind beispielhaft lediglich drei elektronische Sicherungen 31, 32, 33 dargestellt. Die jeweilige Ausgestaltung kann aber auch auf die weiteren elektronischen Sicherungen 31a und 31b angewendet werden (Fig. 1). Zusätzlich ist in Fig. 4 ein Masseleiter 10 eingezeichnet. Der Masseleiter 10 kann auch bei den anderen Ausführungsbeispielen in dieser Form Anwendung finden. Die Adressierung der mehreren elektronischen Sicherungen mittels der Vorrichtung gemäß Fig. 4 wird auch als Impedanzmessungsadressierung bezeichnet.

Bei der Impedanzmessungsadressierung ist die elektrische Schaltung 1, insbesondere die Steuereinheit 4, so ausgelegt, dass bei der Adressierung der mehreren elektronischen Sicherungen 31, 32, 33 der Gruppe zunächst außer einer zu adressierenden ersten elektronischen Sicherung 31 der Gruppe keine der elektronischen Sicherungen 32, 33 der Gruppe die elektrischen Energiequelle 2 belastet. Zur Beschreibung des Ausführungsbeispiels wird angenommen, dass die in Fig. 4 dargestellte elektronische Sicherung 31, die entlang der Busleitung 3 am nächsten zur Steuereinheit 4 liegt, als erstes die Energiequelle belastet. Es kann aber auch mit jeder anderen beliebigen elektronischen Sicherung 31, 32, 33 der Gruppe der mehreren elektronischen Sicherungen 31, 32, 33 begonnen werden.

Insbesondere entnimmt außer einer zu adressierenden ersten elektronischen Sicherung 31 der Gruppe keine der elektronischen Sicherungen 32, 33 der Gruppe über die Busleitung 3 Energie aus der elektrischen Energiequelle 2. Die erste zu adressierende elektronische Sicherung 31 der Gruppe belastet die Energiequelle 2 über einen definierten, schaltbaren Widerstand der ersten elektronischen Sicherung 31. Insbesondere ist der definierte, schaltbare Widerstand ein komplexer Widerstand 34. Der komplexe Widerstand 34 kann einen Ohm'schen Widerstand und/oder einen kapazitiven Widerstand umfassen. Die übrigen der mehreren elektronischen Sicherungen 32, 33 der Gruppe belasten die elektrische Energiequelle 2 nicht über die Busleitung 3. Insbesondere stellen die übrigen der mehreren elektronischen Sicherungen 32, 33 einen vernachlässigbaren Widerstand, insbesondere einen vernachlässigbaren komplexen Widerstand dar. Bei der Adressierung der mehreren elektronischen Sicherungen 31, 32, 33 der Gruppe stellt die erste zu adressierende elektronische Sicherung 31 der Gruppe zu Beginn der Adressierung insbesondere einen Kurzschluss dar. Alternativ hierzu kann auch vorgesehen sein, dass die Busleitung 3 durch die erste zu adressierende elektronische Sicherung 31 auf dem der elektrischen Energiequelle 2 abgewandt liegenden Teil der Busleitung 3 unterbrochen ist, so dass die Busleitung 3 ein offenes Leitungsende aufweist und für nachfolgende elektronische Sicherungen 32, 33 unterbrochen ist.

An die Busleitung 3 wird eine Wechselspannung angelegt. Die Frequenz der Wechselspannung ist von der Steuereinheit 4 vorgegeben. Insbesondere wird die Wechselspannung von der Steuereinheit 4 an die Busleitung 3 angelegt. Die Steuereinheit 4 bestimmt eine erste Phasenverschiebung zwischen der Wechselspannung und dem Strom. Die erste Frequenz der Wechselspannung ist so gewählt, dass die erste Phasenverschiebung kleiner als 360°, insbesondere kleiner als 190°, ist.

Mit der Leitungstheorie kann man ein infinitesimales ("unendlich kurzes") Leitungsstück der Busleitung durch ein Ersatzschaltbild aus konzentrierten Bauelementen beschreiben, sobald die Wellenlänge der in der Leitung übertragenen Signale in der Größenordnung der Leitungslänge liegt. Das ist insbesondere für besonders hohe Frequenzen der Wechselspannung der Fall. Vorliegend erfüllt die Schaltvorrichtung 1, insbesondere die Busleitung 3 und die angelegte Wechselspannung, die Bedingungen dafür, dass die Busleitung nicht vereinfacht als Ohm'scher Widerstand gesehen werden kann, sondern anhand der Leitungstheorie in infinitesimal kleine Leitungsstücke unterteilt werden muss, die sich durch ein Ersatzschaltbild aus konzentrierten Bauelementen, insbesondere aus Kapazitäten und Induktivitäten beschreiben lässt. Daher kommt es beim Anlegen einer hochfrequenten Wechselspannung zu der ersten Phasenverschiebung zwischen Wechselspannung und Strom. Im Ausführungsbeispiel nach Fig. 4 ist die Frequenz der Wechselspannung bei Vorliegen der ersten Phasenverschiebung größer als 100 kHz, insbesondere größer als 1 MHz, bevorzugt größer als 100 MHz.

Wie in Fig. 4 dargestellt, ist die erste zu adressierende elektronische Sicherung 31 in einem entlang der Busleitung 3 gemessenen ersten Abstand D1 zur Steuereinheit 4 angeordnet. Die zweite zu adressierende elektronische Sicherung 32 ist in einem entlang der Busleitung 3 gemessenen zweiten Abstand D2 zur Steuereinheit 4 angeordnet. Die dritte zu adressierende elektronische Sicherung 33 ist in einem entlang der Busleitung 3 gemessenen dritten Abstand D3 zur Steuereinheit 4 angeordnet. Anhand der ersten Phasenverschiebung wird der erste Abstand D1 der ersten zu adressierenden elektronischen Sicherung 31 zur Steuereinheit 4 bestimmt. Insbesondere bestimmt die Steuereinheit 4 den Abstand D1. Dies kann unter Kenntnis der physikalischen Eigenschaften der Busleitung 3 in der Weise geschehen, dass der erste Abstand D1 absolut bestimmt wird. Im Ausführungsbeispiel wird der Abstand D1 jedoch lediglich in Relation zu den anderen Abständen D2, D3 der übrigen elektronischen Sicherungen 32, 33 der Gruppe bestimmt.

Jeder der elektronischen Sicherungen 31, 32, 33 der Gruppe ist jeweils ein komplexer Widerstand 34, 35, 36 zugeordnet. Der komplexe Widerstand 34 ist der elektronischen Sicherung 31, der komplexe Widerstand 35 der elektronischen Sicherung 32 und der komplexe Widerstand 36 der elektronischen Sicherung 33 zugeordnet. Im Ausführungsbeispiel nach Fig. 4 ist der komplexe Widerstand 34, 35, 36 Bestandteil der jeweiligen elektronischen Sicherung 31, 32, 33. Der komplexe Widerstand 34, 35, 36 ist schaltbar. Der komplexe Widerstand 34, 35, 36 ist zusammen mit der zugeordneten elektronischen Sicherung 31, 32, 33 elektrisch zwischen der Busleitung 3 und dem Masseleiter 10 angeordnet. Damit bei der Adressierung der mehreren elektronischen Sicherungen 31, 32, 33 der Gruppe zunächst außer der ersten zu adressierenden elektronischen Sicherung 31 der Gruppe keine der elektronischen Sicherung 32, 33 der Gruppe die elektrischen Energiequelle 2, insbesondere über die Busleitung 3, belastet, ist zunächst nur der der zu adressierenden ersten elektronischen Sicherung 31 zugeordnete komplexe Widerstand 34 geschlossen. Die übrigen komplexen Widerstände 35 und 36 sind geöffnet. Bei der Adressierung der ersten elektronischen Sicherung 31 wird der erste komplexe Widerstand 34 für eine definierte Zeit auf die als Busleitung 3 ausgebildete Versorgungsleitung geschaltet. Alle anderen komplexen Widerstände 35, 36 sind für diesen Zeitraum geöffnet. Es kann auch vorgesehen sein, dass die zu den geöffneten komplexen Widerständen 35, 36 gehörigen elektronischen Sicherungen 32, 33 in diesem Zeitraum derart elektrisch von der elektrischen Energiequelle 2 bzw. von der Busleitung 3 getrennt werden, dass sie von der Versorgung der elektrischen Energiequelle 2 abgeschnitten sind. Es kann vorgesehen sein, dass sich die elektronischen Sicherungen 32 und 33 in diesem Zeitraum aus einem internen Energiespeicher versorgen.

Im Ausführungsbeispiel nach Fig. 4 ist vorgesehen, dass anschließend an die Bestimmung der ersten Phasenverschiebung die Steuereinheit 4 bewirkt, dass die erste zu adressierende elektronische Sicherung 31 die elektrische Energiequelle 2 nicht mehr belastet, insbesondere nicht mehr über die Busleitung 3 belastet. Im Ausführungsbeispiel wird hierzu der komplexe Widerstand 34 geöffnet. Die Steuereinheit bewirkt anschließend, dass außer der zweiten zu adressierenden elektronischen Sicherung 32 der Gruppe der mehreren elektronischen Sicherungen 31, 32, 33 keine der elektronischen Sicherungen 31, 33 der Gruppe die elektrischen Energiequelle 2 belastet. Es kann aber auch vorgesehen sein, dass eine andere elektronische Sicherung 33 die Energiequelle 2 belastet, nachdem die erste Phasenverschiebung bestimmt wurde. Insbesondere kann jede beliebige elektronische Sicherung 32, 33, für die noch keine Phasenverschiebung bestimmt wurde, die Energiequelle 2 exklusiv belasten.

Im Ausführungsbeispiel wird hierzu der komplexe Widerstand 35, der der zweiten zu adressierenden elektronischen Sicherung 32 zugeordnet ist, geschlossen. Alle übrigen komplexen Widerstände 34 und 36 sind geöffnet. Die komplexen Widerstände 34, 35 und 36 sind baugleich.

Die zweite zu adressierende elektronische Sicherung 32 der Gruppe stellt dann insbesondere einen Kurzschluss dar. Alternativ hierzu kann auch vorgesehen sein, dass die Busleitung 3 durch die zu adressierende zweite Sicherung 31 auf dem der elektrischen Energiequelle 2 abgewandt liegenden Teil der Busleitung 3 unterbrochen ist, so dass die Busleitung 3 ein offenes Leitungsende aufweist und für nachfolgende elektronische Sicherungen 33 unterbrochen ist.

Dann wird die Wechselspannung von der Steuereinheit 4 so zu einer zweiten Frequenz verändert, dass die für die erste zu adressierende elektronische Sicherung ermittelte erste Phasenverschiebung zwischen Wechselspannung und Strom vorliegt. Während die zweite Frequenz anliegt, ist unverändert der komplexe Widerstand 34, der der ersten zu adressierenden elektronischen Sicherung 31 zugeordnet ist, geschlossen und die übrigen komplexen Widerstände 35, 36 sind geöffnet.

Um die komplexen Widerstände 34, 35 und 36 ansteuern zu können, ist jeder elektronischen Sicherung 31, 32, 33 und damit auch jedem komplexen Widerstand 34, 35, 36 bereits vor Beginn der Impedanzmessadressierung ein Name zugewiesen. Dieser Name ist noch nicht mit einer Position in der elektrischen Schaltvorrichtung 1 verknüpft. Der Name wird auch als ID bezeichnet. Der Name kann bei der Produktion der elektronischen Sicherung 31, 32, 33 bereits der jeweiligen elektronischen Sicherung 31, 32, 33 zugewiesen werden. Dies ist im Ausführungsbeispiel der Fall. Jeder der mehreren elektronischen Sicherungen 31, 32, 33 ist ein sogenannter UID (Unique Identifier) zugewiesen. Ein UID ist einmalig, so dass eine Verwechslung nahezu ausgeschlossen ist. Es ist aber auch möglich, dass die elektronischen Sicherungen 31, 32, 33 vor Beginn der Impedanzmessadressierung einen zufälligen Namen selbst generieren. Hierbei kann es sich um einen UUID (Universally Unique Identifier) oder einen GUID (Globally Unique Identifier) handeln. Die Wahrscheinlichkeit, dass ein UUID oder ein GUID dupliziert wird, ist so gering, dass die Wahrscheinlichkeit für eine Kollision zumeist vernachlässigbar ist. Vor Beginn der Impedanzmessadressierung müssen sich die elektronischen Sicherungen 31, 32, 33 einigen, welche der elektronischen Sicherungen 31, 32, 33 zuerst als einzige Energie über die Busleitung 3 aus der elektrischen Energiequelle 2 entnimmt. Hierzu existieren im Stand der Technik geeignete Verfahren (Arbitrierung oder Antikollisionsverfahren, die bei Multimastersystemen oder beim Auslesen von RFID-Tags Anwendung finden).

Da die Größe der zweiten Frequenz abhängig von der Länge der Leitung bzw. abhängig vom zweiten Abstand D2 zwischen der Steuereinheit 4 und der elektronischen Sicherung 32 entlang der Busleitung 3 ist, kann die Steuereinheit 4 anhand eines Vergleichs der ersten Frequenz und der zweiten Frequenz entscheiden, ob die erste zu adressierende elektronische Sicherung 31 oder die zweite zu adressierende elektronische Sicherung 32 entlang der Busleitung 3 weiter entfernt von der Steuereinheit 4 liegt. Diejenige elektronische Sicherung 31, 32, die mit der höheren Frequenz verbunden ist, liegt näher an der Steuereinheit 4. Im vorliegenden Beispiel wurde die Impedanzmessadressierung mit der elektronischen Sicherung 31 begonnen, die einen kleineren ersten Abstand D1 zu der Steuereinheit 4 aufweist als die elektronische Sicherung 32, die den zweiten Abstand D2 zur Steuereinheit 4 aufweist. Diese Reihenfolge kann aber auch umgekehrt sein. Im vorliegenden Beispiel ist die erste Frequenz größer als die zweite Frequenz, weil der zweite Abstand D2 größer als der erste Abstand D1 ist.

Nach der Bestimmung der ersten Frequenz und der zweiten Frequenz kann die Steuereinheit 4 zumindest der ersten zu adressierenden elektronischen Sicherung 31 und der zweiten zu adressierenden elektronischen Sicherung 32 über die Busleitung 3 eine Adresse zuweisen. Hierbei wird diejenige elektronische Sicherung 31, die mit der höheren Frequenz verbunden ist, mit einer Position entlang der Busleitung 3 näher an der Steuereinheit 4 verknüpft.

In der Praxis werden bei der Impedanzmessadressierung vor der tatsächlichen Adresszuweisung sämtliche elektronischen Sicherungen 31, 32, 33 der Gruppe einmal so gemessen, dass nur jeweils eine einzige elektronische Sicherung 31, 32, 33 der Gruppe der mehreren elektronischen Sicherungen 31, 32, 33 Energie aus der elektrischen Energiequelle 2 entnimmt und keine der übrigen elektronischen Sicherungen 31, 32, 33 der Gruppe. Anders ausgedrückt wird die Messung der Phasenverschiebung bzw. der der Phasenverschiebung zugeordneten Frequenz für die Zuschaltung jedes einzelnen komplexen Widerstands 34, 35, 36 durchgeführt, während die übrigen komplexen Widerstände 34, 35, 36 geöffnet sind. Anschließend kann die Adressierung der elektronischen Sicherungen 31, 32, 33 vorgenommen werden. Hierbei gilt: Je größer die Frequenz ("zweite Frequenz") ist, die für die Wechselspannung verwendet werden musste, damit sich die erste Phasenverschiebung zwischen Wechselspannung und Strom ergibt, desto näher befindet sich die elektronische Sicherung 31, 32, 33 entlang der Busleitung 3 an der Steuereinheit 4.

Zur Kommunikation der elektronischen Sicherungen 31, 32, 33 ist jeder elektronischen Sicherung 31, 32, 33 ein Umtastmodem 47, 48, 49 zugeordnet. Das Umtastmodem 47, 48, 49 kann auf die Busleitung 3 eine Frequenz aufmodulieren. Das Umtastmodem 47, 48, 49 ist in einer Verbindungsleitung 44, 45, 46 zwischen der elektronischen Sicherung 31, 32, 33 und der Busleitung 3 angeordnet. Die obige Beschreibung des Umtastmodem 47, 48, 49 zum Ausführungsbeispiel nach Fig. 3 trifft auch auf das Ausführungsbeispiel nach Fig. 4 zu.

Auch die Steuereinheit 4 besitzt ein Umtastmodem 50. Mittels des Umtastmodems 50 kann die Steuereinheit 4 über die Busleitung 3 Signale an die elektronischen Sicherungen 31, 32, 33 senden. Durch das Umtastmodem 47, 48, 49 können die elektronischen Sicherungen 31, 32, 33 vor der Impedanzmessungsadressierung der Steuereinheit 4 ihren Namen mitteilen. Mittels des Umtastmodems 50 der Steuereinheit 4 kann die Steuereinheit 4 den elektronischen Sicherungen 31, 32, 33 ihre Adressen zuweisen bzw. die elektronischen Sicherungen adressieren. Im Ausführungsbeispiel ist das Umtastmodem 50 ein Frequenzumtastmodem. Es kann sich aber auch um ein Amplituden- oder Phasenumtastmodem handeln.

Im Ausführungsbeispiel erfolgt dabei lediglich eine Relativordnung der elektronischen Sicherungen 31, 32, 33 entlang der Busleitung 3. Mit der Adresse ist lediglich verbunden, dass eine bestimmte elektronische Sicherung (beispielsweise 33) entlang der Busleitung 3 weiter von der Steuereinheit 4 entfernt ist als eine andere elektronische Sicherung (beispielsweise 32).

Im Ausführungsbeispiel ist die erste Frequenz der Wechselspannung so gewählt, dass die erste Phasenverschiebung etwa ein Vielfaches von 180°, insbesondere 180°, beträgt. Beim Einstellen der ersten Frequenz wird die Stromstärke bei einem Nulldurchgang, insbesondere dem ersten Nulldurchgang, der Wechselspannung gemessen. Insbesondere wird die Frequenz der Wechselspannung ausgehend von einer Frequenz mit einer Phasenverschiebung kleiner als 180° oder kleiner als 360° so verändert, dass die beim Nulldurchgang der Wechselspannung gemessene Stromstärke etwa 0 A, insbesondere 0 A, beträgt. Insbesondere wird die Frequenz der Wechselspannung ausgehend von 0 Hz, insbesondere ausgehend von mindestens 1 Hz, insbesondere ausgehend von höchstens 100 kHz, insbesondere ausgehend von höchstens 1 MHz solange erhöht, bis die beim ersten Nulldurchgang der Wechselspannung (also bei π bzw. bei 180°) gemessene Stromstärke zum ersten Mal etwa 0 A, insbesondere 0 A, beträgt. Bei der dann vorliegenden ersten Frequenz beträgt die erste Phasenverschiebung 180°.

Auch zur Bestimmung der zweiten Frequenz wird die Frequenz der Wechselspannung so gewählt, dass bei einem Nulldurchgang, insbesondere dem ersten Nulldurchgang, der Wechselspannung die Stromstärke etwa 0 A beträgt.

Bei einem Nulldurchgang der Wechselspannung beträgt die Spannung 0 V. Beim ersten Nulldurchgang der Wechselspannung wechselt die Spannung ihr Vorzeichen von Plus zu Minus. Der erste Nulldurchgang der Wechselspannung findet bei 180° bzw. bei π statt.

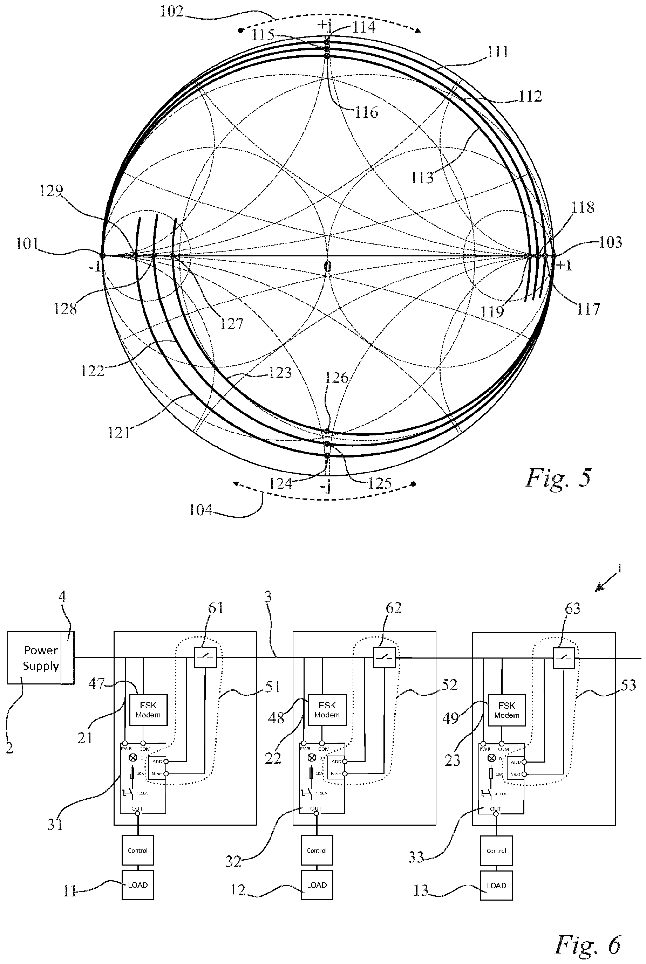

Die erste Frequenz und die zweite Frequenz sind im Ausführungsbeispiel so gewählt, dass die erste Phasenverschiebung etwa 180°, bevorzugt 180°, beträgt. In diesem Fall hat der komplexe Widerstand des Gesamtsystems nur einen Realteil. Dass dies so ist, lässt sich besonders gut anhand des in Fig. 5 dargestellten Smith-Diagramms zeigen.

Das Smith-Diagramm ist kreisförmig und mit einem komplexen Koordinatensystem versehen. Die Impedanzebene (z-Ebene) wird mittels einer konformen Abbildung auf die Reflexionsfaktorebene (r-Ebene) abgebildet, welche innerhalb des Einheitskreises das Smith-Diagramm bildet. Die Abbildung besitzt die besondere Eigenschaft, dass das Bild einer Zahl z in der Impedanzebene und das ihres Kehrwerts punktsymmetrisch um den Ursprung in der Reflexionsfaktorebene liegen. Der normierte Wert des jeweiligen gesamten komplexen Widerstandes der elektrischen Schaltvorrichtung 1 lässt sich im Smith-Diagramm darstellen. Dieser Wert ist abhängig von der Frequenz der Wechselspannung. Die Position des Startpunkts im Smith-Diagramm bei einer Frequenz der Wechselspannung von 0 Hz hängt davon ab, ob die zu adressierende elektronische Sicherung geschlossen oder geöffnet ist. Bei geschlossener elektronischer Sicherung, also bei kurzgeschlossener Leitung, liegt der der Startpunkt 101 an der in Fig. 5 mit entsprechendem Bezugszeichen gekennzeichneten Stelle. In Abhängigkeit der Entfernung bzw. des Abstands der elektronischen Sicherung 31, 32, 33 entlang der Busleitung 3 zu der Steuereinheit 4 folgt der komplexe Gesamtwiderstand einer der Kurven 111, 112, 113. Die Kurve 111 ist dabei der ersten elektronischen Sicherung 31 zugeordnet, die den ersten Abstand D1 zu der Steuereinheit 4 aufweist. Die zweite Kurve 112 ist der zweiten elektronischen Sicherung 32 zugeordnet, die den zweiten Abstand D2 zu der Steuereinheit 4 aufweist. Die dritte Kurve 113 ist der dritten elektronischen Sicherung 33 zugeordnet, die den dritten Abstand D3 zu der Steuereinheit 4 aufweist.

Bei dem entlang der Kurve 111, 112, 113 liegenden Messpunkt 114, 115, 116 beträgt die Phasenverschiebung zwischen Spannung und Strom 90°. Realteil und Imaginärteil des komplexen Gesamtwiderstands sind gleich groß. Die Messpunkte 114, 115, 116 unterscheiden sich dadurch, dass sie bei unterschiedlichen Frequenzen für die Wechselspannung erreicht werden. Beim Messpunkt 114, der der Kurve 111 zugeordnet ist, ist die Frequenz der Wechselspannung größer als beim Messpunkt 115, der der Kurve 112 zugeordnet ist. Beim Messpunkt 115 ist die Frequenz der Wechselspannung größer als beim Messpunkt 116, der der Kurve 113 zugeordnet ist. Eine Phasenverschiebung zwischen angelegter Wechselspannung und gemessenem Strom von 180° wird beim Messpunkt 117, 118, 119 erreicht. Der Messpunkt 117 ist der Kurve 111, der Messpunkt 118 der Kurve 112 und der Messpunkt 119 der Kurve 113 zugeordnet. Der Messpunkt 117 ist der elektronischen Sicherung 31, Messpunkt 118 der elektronischen Sicherung 32 und der Messpunkt 119 der elektronischen Sicherung 33 zugeordnet. Der Messpunkt 117 ist der der elektronischen Sicherung 31 mit dem kleinsten, ersten Abstand D1 zu der Steuereinheit 4 zugeordnet. Der Messpunkt 118 ist der der elektronischen Sicherung 32 mit dem mittleren, zweiten Abstand D2 zu der Steuereinheit 4 zugeordnet. Der Messpunkt 119 ist der der elektronischen Sicherung 33 mit dem größten, dritten Abstand D3 zu der Steuereinheit 4 zugeordnet. Am Messpunkt 117, 118, 119 hat der komplexe Gesamtwiderstand nur einen Realteil. Der Imaginärteil ist null. Die Messpunkte 117, 118, 119 unterscheiden sich dadurch, dass sie bei unterschiedlichen Frequenzen für die Wechselspannung erreicht werden. Wenn die elektrische Energiequelle 2 nur durch die erste elektronische Sicherung 31 belastet ist, wird eine Phasenverschiebung von 180° am Messpunkt 117 erst bei einer höheren Frequenz für die Wechselspannung erreicht, als wenn die elektrische Energiequelle 2 nur durch die zweite elektronische Sicherung 32 belastet ist, und der Messpunkt 118 mit einer Phasenverschiebung von 180° bei einer geringeren Frequenz für die Wechselspannung erreicht wird. In analoger Weise ist der Messpunkt 119 im Vergleich zu den Messpunkten 117 und 118 mit der geringsten Frequenz für die Wechselspannung verbunden. Da der komplexe Gesamtwiderstand an den Messpunkten 117, 118 und 119 lediglich einen Realteil und keinen Imaginärteil aufweist, sind diese Messpunkte bevorzugt.

Aufgrund des dann fehlenden Imaginärteils des komplexen Gesamtwiderstands wird eine Phasenverschiebung bevorzugt, die einem Vielfachen von 180° entspricht. Die erste und die zweite Frequenz werden dementsprechend so gewählt, dass die (erste) Phasenverschiebung ein Vielfaches von etwa 180°, insbesondere ein Vielfaches von 180°, insbesondere etwa 180°, insbesondere 180° beträgt. Im Ausführungsbeispiel entsprechen die erste und die zweite Frequenz demnach einer Phasenverschiebung von 180° zwischen Spannung und Strom. Es kann auch vorgesehen sein, dass die erste und zweite Frequenz so gewählt werden, dass die Phasenverschiebung einem Vielfachen von 90° entspricht. Dementsprechend können die erste und die zweite Frequenz so gewählt werden, dass die Phasenverschiebung 90° (oder 270° bzw. -90°) beträgt. Bei einem Nulldurchgang der Spannung weist der Strom dann einen Extremwert auf. Bei einer Phasenverschiebung von 90° ist der Realteil des komplexen Gesamtwiderstands Null und der komplexe Gesamtwiderstand weist ausschließlich einen Imaginärteil auf.

Bei geschlossener zu adressierender elektronischer Sicherung verläuft die Kurve 111, 112, 113 mit ansteigender Frequenz der Wechselspannung ausgehend von dem Startpunkt 101 in Richtung 102. Die Richtung 102 verläuft im Uhrzeigersinn. Die Kurve 111, 112, 113 verläuft am Rand des Smith-Diagramms. Die Frequenz beim Messpunkt 114, 115, 116 beträgt die Hälfte der Frequenz beim Messpunkt 117, 118, 119. Entlang der Kurve 111, 112, 113 verhält sich die Frequenz linear. Wenn der entlang der Kurve 111, 112, 113 zurückgelegte Weg doppelt so groß ist, ist auch die Frequenz der Wechselspannung doppelt so groß. Dies gilt jeweils für eine der Kurven 111, 112, 113 für sich genommen.

Wenn die Busleitung 2 unmittelbar nach der zu adressierende elektronische Sicherung 31, 32, 33 bzw. derjenige elektronische Sicherung 31, 32, 33, deren Relativabstand bestimmt werden soll, geöffnet ist, also ein offenes Leitungsende vorliegt, liegt der Startpunkt 103 an der in Fig. 5 mit 103 gekennzeichneten Position. An dem Startpunkt wird dann bei einer Wechselspannung mit einer Frequenz von 0 Hz eine Phasenverschiebung von 0° zwischen Wechselspannung und Strom vorliegen. Der komplexe Gesamtwiderstand entspricht dem Isolationswiderstand der Leitung. In analoger Weise wie zuvor für den Fall der geschlossenen Sicherung beschrieben, folgt der komplexe Gesamtwiderstand einer Kurve 121, 122, 123, wenn die Wechselspannung erhöht wird. Die Kurve 121 ist der elektronischen Sicherung 31 zugeordnet. Die Kurve 122 ist der elektronischen Sicherung 32 zugeordnet. Die Kurve 123 ist der elektronischen Sicherung 33 zugeordnet. Der Verlauf der Kurve 121, 122, 123 ist jeweils mit den oben beschriebenen Voraussetzungen verknüpft. Die der Kurve 121, 122, 123 zugeordnete elektronische Sicherung 31, 32, 32 belastet jeweils die elektrische Energiequelle 2 ausschließlich. Mit zunehmender Frequenz der Wechselspannung folgt die Kurve 121, 122, 123 ausgehend vom Startpunkt 103 der Richtung 104. Die Richtung 104 verläuft im Uhrzeigersinn. Die Kurve 121, 122, 123 weist einen Messpunkt 124, 125, 126 auf. Der Messpunkt 124 ist der Kurve 121, der Messpunkt 125 der Kurve 122 und der Messpunkt 126 der Kurve 123 zugeordnet. Am Messpunkt 124, 125, 126 beträgt die Phasenverschiebung zwischen der Spannung und dem Strom --90°. Am Messpunkt 124 ist die Frequenz der Spannung größer als am Messpunkt 125. Am Messpunkt 125 ist die Frequenz der Spannung größer als am Messpunkt 126. Am Messpunkt 124, 125, 126 weist der komplexe Gesamtwiderstand ausschließlich einen Imaginärteil auf gleich groß.

Die Kurve 121, 122, 123 besitzt einen Messpunkt 127, 128, 129. Der Messpunkt 127 ist der Kurve 121, der Messpunkt 128 der Kurve 122 und der Messpunkt 129 der Kurve 123 zugeordnet. Am Messpunkt 127, 128, 129 beträgt die Phasenverschiebung zwischen der Frequenz der Wechselspannung und dem Strom -180°. Am Messpunkt 127, 128, 129 weist der komplexe Gesamtwiderstand lediglich einen Realteil und keinen Imaginärteil auf. Am Messpunkt 127 ist die Frequenz der Wechselspannung größer als am Messpunkt 128. Am Messpunkt 128 ist die Frequenz der Wechselspannung größer als am Messpunkt 129. Entlang der Kurve 121, 122, 123 nimmt die Frequenz der Elektrospannung mit zunehmender Kurvenlänge proportional zu.

An den Messpunkten 117, 118, 119, 127, 128, 129 lässt sich besonders gut messen, da die Phasenlage der Messsignale und damit die Nulldurchgänge um 180° verschoben sind.

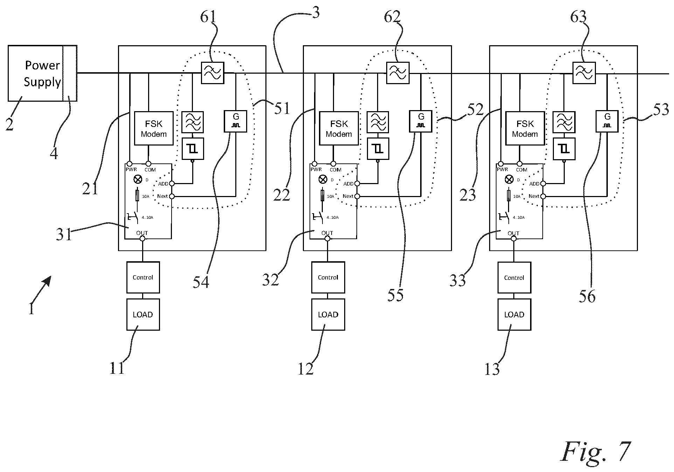

Die Fig. 6 und 7 zeigen alternative Ausgestaltungen eines Details der Schaltvorrichtung 1 aus Fig. 1. Wiederum sind in den Fig. 6 und 7 beispielhaft lediglich die Sicherungen 31, 32 und 33 abgebildet. Die Ausgestaltung der Schaltvorrichtung 1 im Bereich zwischen den elektronischen Sicherungen 31, 32, 33 und der Busleitung 3 kann aber auch bei den übrigen elektronischen Sicherungen 31a, 31b so getroffen sein. Die Adressierung mittels den in Fig. 6 oder 7 gezeigten Vorrichtungen wird auch als Kettenadressierung bezeichnet. Die Fig. 6 und 7 zeigen jeweils alternative Ausgestaltungen für eine Kettenadressierung. Soweit nicht explizit erwähnt, trifft die nachfolgende Beschreibung sowohl auf Fig. 6 als auch auf Fig. 7 zu.

Jeder der mehreren elektronischen Sicherungen 31, 32, 33 ist eine Adressierungseinrichtung 51, 52, 53 zugeordnet. Die Adressierungseinrichtung 51 ist der elektronischen Sicherung 31, die Adressierungseinrichtung 52 der elektronischen Sicherung 32 und die Adressierungseinrichtung 53 ist der elektronischen Sicherung 33 zugeordnet. Bei der Adressierung der mehreren elektronischen Sicherungen 31, 32, 33 der Gruppe mittels der Kettenadressierung läuft für die Adressierung jeder der mehreren elektronischen Sicherungen 31, 32, 33 je ein Adressierungssignal durch zumindest einen Teil der Busleitung 3. Jeder Adressierungseinrichtung 51, 52, 53 kann eine Durchleitung des Adressierungssignals an die entlang der Busleitung 3 unmittelbar benachbarte elektronische Sicherung 32, 33 der Gruppe unterbinden. Beispielsweise kann die erste Adressierungseinrichtung 51 die Leitung eines Adressierungssignals zu der zweiten elektronischen Sicherung 32 unterbinden. Die elektrische Schaltvorrichtung ist so ausgelegt, dass die Adressierungseinrichtung 51, 52, 53 einer elektronischen Sicherung 31, 32, 33 der Gruppe, die ein Adressierungssignal erhalten hat, anschließend bewirkt, dass die entlang der Busleitung 3 in Richtung weg von der Steuereinheit 4 unmittelbar benachbarte elektronische Sicherung 32, 33 der Gruppe im Anschluss adressiert wird.

In den Ausführungsbeispielen nach den Fig. 6 und 7 sendet die Steuereinheit 4 bei der Adressierung der mehreren elektronischen Sicherungen 31, 32, 33 zunächst ein Adressierungssignal zur Adressierung der elektronischen Sicherung 31, die entlang der Busleitung 3 der Steuereinheit 4 am nächsten gelegen ist, aus. Zu diesem Zeitpunkt sind sämtliche Adressierungseinrichtungen 51, 52, 53 so eingestellt, dass sie die Leitung des Adressierungssignals an die entlang der Busleitung 3 unmittelbar benachbarte elektronische Sicherung 32, 33 der Gruppe unterbinden. Daher kann das von der Steuereinheit 4 ausgesendete Adressierungssignal lediglich zu der ersten elektronischen Sicherung 31 gelangen und diese adressieren. Anschließend bewirkt die erste elektronische Sicherung 31, dass die erste ihr zugehörige Adressierungseinrichtung so eingestellt wird, dass sie eine Leitung eines weiteren Adressierungssignals zu der der ersten elektronischen Sicherung 31 entlang der Busleitung 3 unmittelbar benachbarten elektronischen Sicherung 32 durch die Busleitung 3 zulässt. Es kann vorgesehen sein, dass die erste elektronische Sicherung 31 nach ihrer Adressierung über das ihr zugeordnete Umtastmodem 47 ein Signal an die Steuereinheit 4 sendet, das bewirkt, dass die Steuereinheit 4 ein weiteres Adressierungssignal zur Adressierung der nach der zuletzt adressierten elektronischen Sicherung am nächsten entlang der Busleitung 3 zu der Steuereinheit 4 gelegenen elektronischen Sicherung 32 aussendet.

Im Ausführungsbeispiel nach Fig. 6 sendet die Steuereinheit 4 sämtliche Adressierungssignale aus. Im Ausführungsbeispiel nach Fig. 7 sendet die Steuereinheit 4 lediglich das erste Adressierungssignal zur Adressierung der ersten elektronischen Sicherung 31, die der Steuereinheit 4 entlang der Busleitung 3 am nächsten liegt, aus. Nach der Adressierung der ersten elektronischen Sicherung 31 generiert die elektronische Sicherung 31 über einen in Fig. 7 dargestellten Signalgenerator ein Adressierungssignal, das bewirkt, dass die entlang der Busleitung 3 unmittelbar benachbarte elektronische Sicherung 32 adressiert wird.

Alle Adressierungseinrichtungen 51, 52, 53 besitzen eine Dämpfungseinrichtung 61, 62, 63. Die Dämpfungseinrichtung 61 ist der elektronischen Sicherung 31, die Dämpfungseinrichtung 62 der elektronischen Sicherung 32 und die Dämpfungseinrichtung 63 der elektronischen Sicherung 33 zugeordnet. Mittels der Dämpfungseinrichtung 61, 62, 63 einer bestimmten elektronischen Sicherung 31, 32, 33 der Gruppe kann eine Leitung des Adressierungssignals zu der entlang der Busleitung 3 unmittelbar zu der bestimmten elektronischen Sicherung 31 benachbarten elektronischen Sicherung 32, 33 der Gruppe unterbunden werden. Bei der Adressierung der mehreren elektronischen Sicherungen 31, 32, 33 der Gruppe über die Busleitung 3 wirken zunächst alle Dämpfungseinrichtungen 61, 62, 63 derart, dass die Leitung eines Adressierungssignals in der Busleitung 3 zwischen zwei entlang der Busleitung 3 unmittelbar benachbarten elektronischen Sicherungen 31, 32, 33 der Gruppe unterbunden ist. In den Ausführungsbeispiel nach den Fig. 6 und 7 ist die Dämpfungseinrichtung 61, 62, 63 in der Busleitung 3 angeordnet. Zu Beginn der Kettenadressierung sendet die Steuereinheit 4 über die Busleitung 3 ein erstes Adressierungssignal aus, das unbeeinträchtigt von den Dämpfungseinrichtungen 61, 62, 63 zu der elektronischen Sicherung 31 gelangt, die entlang der Busleitung 3 am nächsten an der Steuereinheit 4 liegt. Dieser elektronischen Sicherung 31 wird über das Adressierungssignal eine Adresse zugewiesen. Die entsprechende Adresse ist mit der entlang der Busleitung 3 am nächsten zur Steuereinheit 4 liegenden Position verknüpft. Die zu der auf diese Weise adressierten elektronischen Sicherung 31 gehörige Dämpfungseinrichtung 51 unterbindet eine Leitung des ersten Adressierungssignals an die entlang der Busleitung 3 unmittelbar benachbart zu der zuerst zu adressierenden elektronischen Sicherung 31 liegenden elektronischen Sicherung 32, 33.

Im Ausführungsbeispiel nach Fig. 6 ist die Dämpfungseinrichtung 61, 62, 63 ein schaltbarer Schalter. Im Ausführungsbeispiel ist die Dämpfungseinrichtung 61, 62, 63 in Fig. 6 ein Feldeffekttransistor, insbesondere ein MOSFET. Diese Dämpfungseinrichtung 61, 62, 63 kann von der elektronischen Sicherung 31, 32, 33 geschaltet werden. Im Ausführungsbeispiel ist die Dämpfungseinrichtung 61, 62, 63 bzw. der durch die Dämpfungseinrichtung 61, 62, 63 gebildete Schalter stromlos offen. Bei der Aussendung des ersten Adressierungssignals kann das Adressierungssignal lediglich zu der ersten elektronischen Sicherung 31 gelangen. Die erste Dämpfungseinrichtung 61 verhindert als in der Busleitung 3 angeordneter offener Schalter, dass das erste Adressierungssignal zu der zweiten elektronischen Sicherung 32 gelangen kann. Die erste Dämpfungseinrichtung 61 ist in der Busleitung 3 zwischen der ersten elektronischen Sicherung 31 und der zweiten elektronischen Sicherung 32 angeordnet. In analoger Weise ist die zweite Dämpfungseinrichtung 62 in der Busleitung 3 zwischen der zweiten elektronischen Sicherung 32 und der dritten elektronischen Sicherung 33 angeordnet. Die erste Dämpfungseinrichtung 61, insbesondere der MOSFET, kann durch ein von der entsprechenden elektronischen Sicherung 31, 32, 33 ausgesendetes elektrisches Signal geschlossen werden. Nach der Adressierung der ersten elektronischen Sicherung 31 wird die erste Dämpfungseinrichtung 61 auf diese Weise ausgeschaltet. Der Schalter ist dann geschlossen. Ein zweites, von der Steuereinheit 4 ausgesandtes Adressierungssignal kann dann in der Busleitung 3 zu der zweiten elektronischen Sicherung 32 gelangen und diese zweite elektronische Sicherung 32 adressieren. Anschließend wird die zweite Dämpfungsvorrichtung 62 ausgeschaltet, indem der Schalter geschlossen wird.

Wie in Fig. 7 dargestellt, kann die Dämpfungseinrichtung 61, 62 jedoch auch als Passfilter, insbesondere als Tiefpassfilter ausgebildet sein. Die hochfrequenten Adressierungssignale können diesen Passfilter nicht passieren. Die Energieleitung in der Busleitung ist hiervon nicht beeinträchtigt. Nach der Adressierung der ersten elektronischen Sicherung 31, die entlang der Busleitung 3 der Steuereinheit 4 am nächsten liegt, durch ein von der Steuereinheit 4 ausgesendetes Adressierungssignal, generiert die erste elektronische Sicherung 31 im Ausführungsbeispiel nach Fig. 7 mittels des ersten Signalgenerators 54 ein zweites Adressierungssignal zur Adressierung der zweiten elektronischen Sicherung 32, die nach der zuletzt adressierten ersten elektronischen Sicherung 31 entlang der Busleitung 3 der Steuereinheit 4 am nächsten liegt. Das zweite Adressierungssignal wird der Busleitung 3 zwischen der ersten Dämpfungseinrichtung 61 und der zweiten elektronischen Sicherung 32 zugeleitet. Dadurch ist das zweite Adressierungssignal unbeeinträchtigt von der ersten Dämpfungsvorrichtung 61. Diese Verfahrensschritte werden für die nachfolgenden elektronischen Sicherungen 32 und 33 in analoger Weise wiederholt. Auf diese Weise werden die mehreren elektronischen Sicherungen 31, 32, 33 der Gruppe sukzessive, kettenartig adressiert. Die zuletzt adressierte elektronische Sicherung 31, 32, 33 bewirkt jeweils die Adressierung der unmittelbar benachbart liegenden elektronischen Sicherung 32, 33.

In allgemeiner Form für beide Ausführungsbeispiele nach den Fig. 6 und 7 formuliert, initiiert eine elektronische Sicherung 31, 32, 33, nachdem ihr eine Adresse zugewiesen wurde, dass:
- die ihr zugehörige Dämpfungsvorrichtung 61, 62, 63 ausgeschaltet wird und ein weiteres Adressierungssignal durch die Steuereinheit 4 ausgesendet wird oder
- ein weiteres Adressierungssignal von der zu der zuletzt adressierten elektronischen Sicherung 31, 32, 33 gehörigen Adressierungseinrichtung 51, 52, 53 generiert wird und dieses weitere Adressierungssignal der Busleitung 3 bezüglich der Steuereinheit 4 hinter der zu der zuletzt adressierten elektronischen Sicherung 31, 32, 33 gehörigen Dämpfungseinrichtung 61, 62, 63 zugeleitet wird.

Dieses weitere Adressierungssignal dient zur Adressierung der entlang der Busleitung unmittelbar zu der zuletzt adressierten elektronischen Sicherung 31, 32, 33 benachbarten elektronischen Sicherung 32, 33 der Gruppe. Mittels des weiteren Adressierungssignals wird der entlang der Busleitung 3 in Richtung weg von der Steuereinheit 4 unmittelbar zu der zuletzt adressierten elektronischen Sicherung 31, 32, 33 benachbarten elektronischen Sicherung 32, 33 über die Busleitung 3 eine Adresse zugewiesen, die mit der entlang der Busleitung 3 in Richtung weg von der Steuereinheit 4 am nächsten zur zuletzt adressierten elektronischen Sicherung 31, 32 liegenden Position verknüpft ist. Die Adressierung der Gruppe der mehreren elektronischen Sicherungen 31, 32, 33 wird sukzessive solange fortgesetzt, bis alle der mehreren elektronischen Sicherungen 31, 32, 33 der Gruppe adressiert sind.

Im Ausführungsbeispiel nach Fig. 7 ist eine Kommunikation zwischen der Steuereinheit 4 und den elektronischen Modulen 31, 32, 33 weiterhin durch Aufmodulation eines Signals mit einer tiefen Frequenz möglich. Die als Tiefpassfilter ausgebildeten Dämpfungseinrichtungen 61, 62, 63 verhindern lediglich die Leitung von hochfrequenten Signalen durch die Busleitung 3. Die Adressierungssignale sind entsprechend derartige hochfrequente Signale. Das Frequenzband der Busleitung bzw. der als Kommunikationsleitung genutzten Busleitung wird in einen hochfrequenten und einen tieffrequenten Bereich aufgeteilt.

## Patentansprüche

1. Elektrische Schaltvorrichtung umfassend:
- mehrere elektrische Verbraucher (11, 12, 13),
- eine elektrische Energiequelle (2) zur Versorgung der mehreren elektrischen Verbraucher (11, 12, 13) mit elektrischer Energie,
- eine Busleitung (3) zur Leitung der elektrischen Energie von der elektrischen Energiequelle (2) zu den mehreren elektrischen Verbrauchern (11, 12, 13), wobei die mehreren elektrischen Verbraucher (11, 12, 13) mit der Busleitung (3), insbesondere jeweils über Stichleitungen (21, 22, 23), verbunden sind,
- eine Gruppe mehrerer elektronischer Sicherungen (31, 32, 33), die elektrisch zwischen der elektrischen Energiequelle (2) und den mehreren elektrischen Verbrauchern (11, 12, 13), insbesondere in den Stichleitungen (21, 22, 23), angeordnet sind, wobei die mehreren elektronischen Sicherungen (31, 32, 33) getrennt voneinander ausgebildet sind, wobei die mehreren elektronischen Sicherungen (31, 32, 33) verteilt in der elektrischen Schaltvorrichtung (1) angeordnet sind,
**dadurch gekennzeichnet, dass** die elektrische Schaltvorrichtung (1) eine Steuereinheit (4) umfasst, dass die Steuereinheit (4) in der Busleitung (3) angeordnet ist, und dass die Steuereinheit (4) so ausgelegt ist, dass mittels der Steuereinheit (4) eine Adressierung der mehreren elektronischen Sicherungen (31, 32, 33) der Gruppe über die Busleitung (3) erfolgen kann.

2. Elektrische Schaltvorrichtung nach Anspruch 1,
**dadurch gekennzeichnet, dass** bei der Adressierung der Gruppe der mehreren elektronischen Sicherungen (31, 32, 33) eine Position der zu adressierenden elektronischen Sicherung (31, 32, 33) aus der Gruppe relativ zu den übrigen elektronischen Sicherungen (31, 32, 33) aus der Gruppe in der elektrischen Schaltvorrichtung (1) bestimmt wird und anschließend, vorzugsweise durch die Steuereinheit (4), eine Adresse an die zu adressierende elektronische Sicherung (31, 32, 33) vergeben wird.

3. Elektrische Schaltvorrichtung nach Anspruch 1 oder 2,
**dadurch gekennzeichnet, dass** die elektrische Schaltvorrichtung (1) mehrere Strommesseinrichtungen (41, 42, 43) umfasst, dass jeder der mehreren elektronischen Sicherungen (31, 32, 33) eine Strommesseinrichtung (41, 42, 43) mit einem Belastungswiderstand (81, 82, 83) zugeordnet ist, dass zumindest ein Teil der Gruppe der mehreren elektronischen Sicherungen (31, 32, 33) einer Anfangsbelastungsgruppe angehört, dass die Anfangsbelastungsgruppe
- die entlang der Busleitung (3) am weitesten entfernt von der elektrischen Energiequelle (2) angeordnete elektronische Sicherung (33) der Gruppe der mehreren elektronischen Sicherungen (31, 32, 33) und
- zumindest eine weitere elektronische Sicherung (31, 32) der Gruppe der mehreren elektronischen Sicherungen (31, 32, 33), insbesondere alle übrigen elektronischen Sicherungen (31, 32, 33) der Gruppe der mehreren elektronischen Sicherungen (31, 32, 33),
umfasst, dass die Steuereinheit (4) so ausgelegt ist, dass bei der Adressierung der mehreren elektronischen Sicherungen (31, 32, 33) der Gruppe zunächst alle Belastungswiderstände (81, 82, 83) der Anfangsbelastungsgruppe auf die Busleitung (3) geschaltet sind und die elektrische Energiequelle (2) belasten, dass die den elektronischen Sicherungen (31, 32, 33) der Anfangsbelastungsgruppe zugeordneten Strommesseinrichtungen (41, 42, 43) den Strom in der Busleitung (3) nach der jeweils zugehörigen elektronischen Sicherung (31, 32, 33) messen, und dass die Steuereinheit (4) derjenigen elektronischen Sicherung (33) der Anfangsbelastungsgruppe, der ein Strommesswert unterhalb eines Leerlaufstromwerts der elektrischen Schaltvorrichtung (1) zugehörig ist, über die Busleitung (3) eine Adresse zuweist, die mit der entlang der Busleitung (3) am weitesten von der elektrischen Energiequelle (2) entfernten Position verknüpft ist.

4. Elektrische Schaltvorrichtung nach Anspruch 3,
**dadurch gekennzeichnet, dass** bei der Adressierung der Gruppe der mehreren elektronischen Sicherungen (31, 32, 33) nachdem einer elektronischen Sicherung (31, 32, 33) eine Adresse zugewiesen wurde der zugehörige Belastungswiderstand (81, 82, 83) von der Busleitung (3) getrennt wird und bei der weiteren Adressierung getrennt bleibt, dass bei der weiteren Adressierung der Gruppe der mehreren elektronischen Sicherungen (31, 32, 33) die elektrische Energiequelle (2) durch die weiterhin auf die Busleitung (3) geschalteten Belastungswiderstände (81, 82, 83) der Anfangsbelastungsgruppe belastet ist, dass die den elektronischen Sicherungen (31, 32, 33) der Anfangsbelastungsgruppe zugeordneten Strommesseinrichtungen (41, 42, 43) den Strom in der Busleitung (3) nach der jeweils zugehörigen elektronischen Sicherung (31, 32, 33) messen, und dass die Steuereinheit (4) derjenigen elektronischen Sicherung (31, 32) der elektronischen Sicherungen (31, 32) der Anfangsbelastungsgruppe mit weiterhin auf die Busleitung (3) geschalteten Belastungswiderständen (81, 82, 83), der ein Strommesswert unterhalb eines Leerlaufstromwerts der elektrischen Schaltvorrichtung (1) zugehörig ist, über die Busleitung (3) eine Adresse zuweist, die mit der entlang der Busleitung (3) am weitesten von der elektrischen Energiequelle (2) entfernten Position der elektronischen Sicherungen (31, 32) der Anfangsbelastungsgruppe mit weiterhin auf die Busleitung (3) geschalteten Belastungswiderständen (81, 82, 83) verknüpft ist.

5. Elektrische Schaltvorrichtung nach Anspruch 4,
**dadurch gekennzeichnet, dass** die Adressierung solange erfolgt bis alle Belastungswiderstände (81, 82, 83) der Anfangsbelastungsgruppe von der Busleitung (3) getrennt sind.

6. Elektrische Schaltvorrichtung nach einem der Ansprüche 3 bis 5,
**dadurch gekennzeichnet, dass** die elektronische Sicherung (31, 32, 33) aus der Anfangsbelastungsgruppe, deren Belastungswiderstand (81, 82, 83) auf die Busleitung (3) geschaltet ist und der ein Strommesswert unterhalb eines Leerlaufstromwerts der elektrischen Schaltvorrichtung (1) zugehörig ist, ein Signal zur Adressanfrage an die Steuereinheit (4) sendet.

7. Elektrische Schaltvorrichtung nach Anspruch 1 oder 2,
**dadurch gekennzeichnet, dass** die elektrische Schaltvorrichtung (1), insbesondere die Steuereinheit (4), so ausgelegt ist, dass bei der Adressierung der mehreren elektronischen Sicherungen (31, 32, 33) der Gruppe zunächst außer einer zu adressierenden ersten elektronischen Sicherung (31) der Gruppe keine der elektronischen Sicherungen (31, 32, 33) der Gruppe über die Busleitung (3) die elektrische Energiequelle (2) belastet, dass eine Wechselspannung mit einer von der Steuereinheit (4) vorgegebenen ersten Frequenz an die Busleitung (3) angelegt wird, insbesondere von der Steuereinheit (4), dass die Steuereinheit (4) eine erste Phasenverschiebung zwischen Strom und Spannung bestimmt, und dass anhand der ersten Phasenverschiebung der Abstand (D1, D2, D3) der ersten zu adressierenden elektronischen Sicherung (31, 32, 33) zur Steuereinheit (4), insbesondere in Relation zu den übrigen elektronischen Sicherungen (31, 32, 33) der Gruppe, bestimmt wird, und insbesondere dass die erste Frequenz so gewählt ist, dass die erste Phasenverschiebung ≤ 360°ist.

8. Elektrische Schaltvorrichtung nach Anspruch 7,
**dadurch gekennzeichnet, dass** anschließend an die Bestimmung der ersten Phasenverschiebung außer einer zweiten zu adressierenden elektronischen Sicherung (32, 33) der Gruppe der mehreren elektronischen Sicherungen (31, 32, 33) keine der elektronischen Sicherungen (31, 32, 33) der Gruppe über die Busleitung (3) die elektrischen Energiequelle (2) belastet,
dass eine Wechselspannung von der Steuereinheit (4) mit einer zweiten Frequenz angelegt wird, wobei die zweite Frequenz so gewählt ist, dass die für die erste zu adressierende elektronische Sicherung (31, 32, 33) ermittelte erste Phasenverschiebung zwischen Strom und Spannung vorliegt, und dass die Steuereinheit (4) anhand eines Vergleichs der ersten Frequenz und der zweiten Frequenz entscheidet, ob die erste zu adressierende elektronische Sicherung (31, 32, 33) oder die zweite zu adressierende elektronische Sicherung (31, 32, 33) entlang der Busleitung (4) weiter entfernt von der Steuereinheit (4) liegt.

9. Elektrische Schaltvorrichtung nach Anspruch 8,
**dadurch gekennzeichnet, dass** die Steuereinheit (4) nach der Bestimmung der zweiten Frequenz zumindest der ersten zu adressierenden elektronischen Sicherung (31, 32) und der zweiten zu adressierenden elektronischen Sicherung (32, 33) über die Busleitung (3) eine Adresse zuweist, wobei diejenige elektronische Sicherung (31, 32), die mit der höheren Frequenz verbunden ist, mit einer Position entlang der Busleitung (3) näher an der Steuereinheit (4) verknüpft ist.

10. Elektrische Schaltvorrichtung nach Anspruch 8 oder 9,
**dadurch gekennzeichnet, dass** die erste Frequenz so gewählt wird, dass die erste Phasenverschiebung ein Vielfaches von 90°, insbesondere ein Vielfaches von 180° beträgt.

11. Elektrische Schaltvorrichtung nach Anspruch 10,
**dadurch gekennzeichnet, dass** zur Wahl der ersten Frequenz so, dass die erste Phasenverschiebung ein Vielfaches von 180°, insbesondere 180° beträgt, die Stromstärke bei einem Nulldurchgang der Wechselspannung gemessen wird, dass die Frequenz der Wechselspannung ausgehend von einer Frequenz mit einer Phasenverschiebung kleiner als 180° oder kleiner als 360° so verändert wird, dass die Stromstärke etwa Null beträgt, und insbesondere, dass zur Bestimmung der zweiten Frequenz die Frequenz der Wechselspannung so gewählt wird, dass bei einem Nulldurchgang der Wechselspannung die Stromstärke etwa Null beträgt.

12. Elektrische Schaltvorrichtung nach Anspruch 1 oder 2,
**dadurch gekennzeichnet, dass** jeder der mehreren elektronischen Sicherungen (31, 32, 33) eine Adressierungseinrichtung (51, 52, 53) zugeordnet ist, dass bei der Adressierung der mehreren elektronischen Sicherungen (31, 32, 33) der Gruppe für die Adressierung jeder elektronischen Sicherung (31, 32, 33) je ein Adressierungssignal durch zumindest einen Teil der Busleitung (3) läuft, dass jede Adressierungseinrichtung (51, 52, 53) eine Leitung des Adressierungssignals an die entlang der Busleitung (3) unmittelbar benachbarte elektronische Sicherung (32, 33) der Gruppe unterbinden kann, dass die elektrische Schaltvorrichtung (1) so ausgelegt ist, dass die Adressierungseinrichtung (51, 52, 53) einer elektronischen Sicherung (31, 32, 33) der Gruppe, die eine Adresse erhalten hat, anschließend bewirkt, dass die entlang der Busleitung (3) unmittelbar benachbarte elektronische Sicherung (32, 33) der Gruppe adressiert wird.

13. Elektrische Schaltvorrichtung nach Anspruch 12,
**dadurch gekennzeichnet, dass** alle Adressierungseinrichtungen (51, 52, 53) eine Dämpfungseinrichtung (61, 62, 63) besitzen, dass durch die Dämpfungseinrichtung (61, 62, 63) einer bestimmten elektronischen Sicherung (31, 32, 33) der Gruppe eine Leitung des Adressierungssignals zu der entlang der Busleitung (3) unmittelbar zu der bestimmten elektronischen Sicherung (31, 32, 33) benachbarten elektronische Sicherung (32, 33) der Gruppe unterbunden werden kann, dass bei der Adressierung der mehreren elektronischen Sicherungen (31, 32, 33) der Gruppe über die Busleitung (3) zunächst alle Dämpfungseinrichtungen (61, 62, 63) , insbesondere in der Busleitung (3), derart wirken, dass die Leitung eines Adressierungssignals in der Busleitung (3) zwischen zwei entlang der Busleitung (3) unmittelbar benachbarten elektronischen Sicherungen (31, 32, 33) der Gruppe unterbunden ist, dass die Steuereinheit (4) dann über die Busleitung (3) ein erstes Adressierungssignal aussendet, das ungestört durch die Dämpfungseinrichtungen (31, 32, 33) zu der elektronischen Sicherung (31) gelangt, die entlang der Busleitung (3) am nächsten an der Steuereinheit (4) liegt und dieser eine Adresse zuweist, die mit der entlang der Busleitung (3) am nächsten zur Steuereinheit (4) liegenden Position verknüpft ist, und dass die zu der adressierten elektronischen Sicherung (31) gehörige Dämpfungseinrichtung (51) eine Leitung des ersten Adressierungssignals an die entlang der Busleitung (3) unmittelbar benachbart zu der adressierten elektronischen Sicherung (31) liegende elektronische Sicherung (32, 33) unterbindet.

14. Elektrische Schaltvorrichtung nach Anspruch 13,
**dadurch gekennzeichnet, dass** bei der Adressierung der mehreren elektronischen Sicherungen (31, 32, 33) der Gruppe, nachdem einer elektronischen Sicherung (31, 32, 33) eine Adresse zugewiesen wurde, diese elektronische Sicherung (31, 32, 33) initiiert, dass
- die ihr zugehörige Dämpfungsvorrichtung (61, 62, 63) ausgeschaltet wird und ein weiteres Adressierungssignal durch die Steuereinheit (4) ausgesendet wird oder
- ein weiteres Adressierungssignal von der zu der zuletzt adressierten elektronischen Sicherung (31, 32, 33) gehörigen Adressierungseinrichtung (51, 52, 53) generiert wird und dieses weitere Adressierungssignal der Busleitung (3) bezüglich der Steuereinheit (4) hinter der zu der zuletzt adressierten elektronischen Sicherung (31, 32, 33) gehörigen Dämpfungseinrichtung (51, 52, 53) zur Adressierung der entlang der Busleitung (3) unmittelbar zu der zuletzt adressierten elektronischen Sicherung (31, 32, 33) benachbarten elektronischen Sicherung (32, 33) der Gruppe zugeleitet wird,
Adressierungssignal und dass mittels des weiteren Adressierungssignals der entlang der Busleitung (3) unmittelbar zu der zuletzt adressierten elektronischen Sicherung (31, 32, 33) benachbarten elektronischen Sicherung (32, 33) über die Busleitung (3) eine Adresse zugewiesen wird, die mit der entlang der Busleitung (3) am nächsten zur zuletzt adressierten elektronischen Sicherung (31, 32) liegenden Position verknüpft ist.

15. Elektrische Schaltvorrichtung nach Anspruch 14,
**dadurch gekennzeichnet, dass** die Adressierung der Gruppe der mehreren elektronischen Sicherungen (31, 32, 33) sukzessive solange fortgesetzt wird, bis alle der mehreren elektronischen Sicherungen (31, 32, 33) der Gruppe adressiert sind.
